# EUROPEAN PATENT APPLICATION

(11) **EP 4 752 391 A1**
(43) Date of publication of application: **03.06.2026**
(21) Application number: 24845395.3
(22) Date of filing: 09.07.2024
(51) Int. Cl.: F16D 48/06, F16D 11/14

(54) **DOG CLUTCH ENGAGEMENT CONTROL SYSTEM**

(30) Priority: 26.07.2023 JP 2023121475
(71) Applicant: DENSO CORPORATION, Kariya-city, Aichi 448-8661 (JP)
(72) Inventor: NAKAGAWA, Masashi, Kariya-city, Aichi 4488661 (JP); SHIKATA, Yasuhiro, Kariya-city, Aichi 4488661 (JP); NAKANISHI, Daisuke, Kariya-city, Aichi 4488661 (JP)
(74) Representative: Kuhnen & Wacker Patent- und Rechtsanwaltsbüro PartG mbB
(86) International application number: PCT/JP2024/024806
(87) International publication number: WO 2025/023014

(57) **Abstract**

A clutch actuator (5) is configured to move a first clutch member (11) and a second clutch member (12) of a dog clutch (10) relative to each other in the axial direction. A phase difference sensor (6) is configured to detect a phase difference between the first clutch member (11) and the second clutch member (12). A controller (7), in response to an engagement instruction for engaging the dog clutch (10) in the disengaged state, increases a rotational speed of an input shaft (3) toward a rotational speed of an output shaft (4) to synchronize rotation of the input shaft (3) and the output shaft (4). When a predetermined prediction execution condition is satisfied during execution of the synchronization operation, the controller (7) performs the following processing. The controller (7) detects an engagement timing at which the dog clutch (10) is engageable based on an output of the phase difference sensor (6), predicts a future engagement timing based on a most recent past engagement timing and an estimated rotational speed of the input shaft, and drives the clutch actuator (5) in accordance with the predicted future engagement timing.

## Description

### CROSS REFERENCE TO RELATED APPLICATION

This application is based on and incorporates herein by reference Japanese Patent Application No. 2023-121475 filed on July 26, 2023.

### TECHNICAL FIELD

The present invention relates to a dog clutch engagement control system for controlling engagement of a dog clutch.

### BACKGROUND ART

Conventionally, there is known a dog clutch engagement control system that performs clutch control by predicting a future timing (engagement timing) at which engagement between members becomes possible, in cases where the dog clutch is in a released state and a first clutch member and a second clutch member are rotating at different rotational speeds. For example, Patent Literature 1 discloses a technique in which a future engagement timing is predicted based on past engagement timings (hereinafter referred to as "engagement timings") detected by a phase difference sensor, and a drive timing of a clutch actuator is determined accordingly.

### PRIOR ART LITERATURE

### PATENT LITERATURE

Patent Literature 1: JP2021-025561A

### SUMMARY OF THE INVENTION

In the dog clutch engagement control system of Patent Literature 1, a controller stores the engagement timings detected in the past. The controller calculates an approximation line passing through these points to predict the future engagement timing. Since this method requires multiple past measurement data points, it takes time to predict the future engagement timing, which may reduce responsiveness of the clutch control.

An object of the present disclosure is to provide a dog clutch engagement control system that improves responsiveness of clutch engagement.

A dog clutch engagement control system of the present disclosure includes a dog clutch, a clutch actuator, a phase difference sensor, and a controller.

A dog clutch includes a first clutch member and a second clutch member, and is capable of switching between an engaged state and a disengaged state between the first clutch member and the second clutch member. The first clutch member is connected to an input shaft and has first engagement teeth arranged in a circumferential direction. The second clutch member is connected to an output shaft and has second engagement teeth arranged in a circumferential direction, the second engagement teeth being engageable with the first engagement teeth directly or via an intermediate member.

In the dog clutch engagement control system mounted on a vehicle, the input shaft is connected to a motor or an internal combustion engine, for example, via a reduction gear. The output shaft is connected to a drive wheel via an axle.

The clutch actuator is configured to move the first clutch member and the second clutch member relative to each other in the axial direction, or, when an intermediate member is used, to move the intermediate member relative to the first clutch member and the second clutch member in the axial direction. The phase difference sensor is configured to detect a phase difference between the first clutch member and the second clutch member. The controller is configured to output a drive instruction to the clutch actuator in accordance with an engagement timing at which the dog clutch is engageable.

The controller is configured to, when a predetermined prediction execution condition is satisfied during execution of a synchronization operation in which a rotational speed of the input shaft is increased toward a rotational speed of the output shaft to synchronize rotation of the input shaft and the output shaft in response to an engagement instruction for engaging the dog clutch in the disengaged state, perform the following processing.

In a first aspect, the controller is configured to detect an engagement timing at which the dog clutch is engageable, based on an output of the phase difference sensor.

In a second aspect, the controller calculates an estimated phase difference between the input shaft and the output shaft based on an initial phase difference between the input shaft and the output shaft at the start of the synchronization operation, and an accumulated phase difference obtained by integrating the rotational speed difference between the input shaft and the output shaft over time during the synchronization operation. The controller switches between (a) a method of detecting the engagement timing based on the output of the phase difference sensor, and (b) a method of estimating the engagement timing based on the estimated phase difference, depending on whether detection of the phase difference by the phase difference sensor is possible.

In each aspect, the controller predicts a future engagement timing based on the most recent past engagement timing information and an estimated rotational speed of the input shaft, and drives the clutch actuator in accordance with the predicted result.

The most recent past engagement timing information includes the latest information just acquired by the controller. When the controller performs future prediction based on the latest information it has acquired, that information is also regarded as past information. In the conventional technology disclosed in Patent Literature 1, engagement timing information from multiple past instances was required. However, in the present invention, by predicting the future engagement timing based on the most recent past engagement timing information and the estimated rotational speed of the input shaft, the responsiveness of clutch engagement can be improved.

### BRIEF DESCRIPTION OF DRAWINGS

The above and other objects, features and advantages of the present disclosure will become more apparent from the following detailed description made with reference to the accompanying drawings.
FIG. 1 is a diagram illustrating an example configuration of a vehicle to which a dog clutch engagement control system is applied.
FIG. 2 is a schematic diagram illustrating switching operation between 2WD and 4WD.
FIG. 3 is a timing chart illustrating the switching operation from 2WD to 4WD.
FIG. 4 is a schematic diagram illustrating state transitions of engagement clutch.
FIG. 5 is a block diagram of the dog clutch engagement control system according to a first embodiment.
FIG. 6 is a diagram illustrating detection principle of a phase difference sensor.
FIG. 7 is a diagram illustrating issues in a comparative example regarding prediction of a future engagement timing of the engagement clutch, as well as a resolution of the issues according to the first embodiment.
FIG. 8 is a main flowchart of clutch engagement control according to the first embodiment.
FIG. 9 is a sub-flowchart of S8 (engagement operation start determination) in FIG. 8.
FIG. 10 is an estimated rotation speed map illustrating an estimated rotation speed of an input shaft during synchronization operation.
FIG. 11 is a timing chart of the clutch engagement control according to the first embodiment (when the estimated rotation speed is greater than an actual rotation speed).
FIG. 12 is a timing chart of the clutch engagement control according to the first embodiment (when the estimated rotation speed is less than the actual rotation speed).
FIG. 13 is a flowchart of switching of phase difference information acquisition means according to a second embodiment.
FIG. 14 is a diagram illustrating means for acquiring phase difference information according to the comparative example and the second embodiment.
FIG. 15 is a diagram illustrating calculation of cumulative phase difference.
FIG. 16 is a flowchart of time axis correction for the estimated rotation speed map according to a third embodiment.
FIG. 17 is a timing chart illustrating the time axis correction of the estimated rotation speed map.
FIG. 18 is a timing chart of the clutch engagement control after correction of the estimated rotation speed.
FIG. 19 is a flowchart of input shaft actual rotation speed learning according to a fourth embodiment.
FIG. 20 is a diagram illustrating updating of the estimated rotation speed map based on the learning of an actual input shaft rotation speed.
FIG. 21 is a flowchart of target rotation speed increase gradient switching according to a fifth embodiment.
FIG. 22 is a timing chart of synchronization operation according to the fifth embodiment.
FIG. 23 is a timing chart of synchronization operation according to a modification of the fifth embodiment.
FIG. 24 is a diagram illustrating a method for detecting phase difference based on a phase difference sensor signal.
FIG. 25 shows phase difference detection pattern (1) in a case where a second gradient is smaller (a1 > a2).
FIG. 26 shows phase difference detection pattern (2) in a case where the second gradient is smaller (a1 > a2).
FIG. 27 shows phase difference detection pattern (1) in a case where the second gradient is large (a1 ≒ a2).
FIG. 28 shows phase difference detection pattern (2) in a case where the second gradient is large (a1 ≒ a2).
FIG. 29 is a flowchart of idle rotational speed setting according to a sixth embodiment.
FIG. 30 is a timing chart of synchronization operation in the sixth embodiment.
FIG. 31 is a diagram illustrating an example of setting a target idle rotational speed according to vehicle speed.
FIG. 32 is a diagram illustrating an example of setting the target idle rotational speed according to operating conditions other than vehicle speed.
FIG. 33 is a flowchart of lead operation time setting according to a seventh embodiment.
FIG. 34 is a timing chart of clutch engagement control in the seventh embodiment.
FIG. 35 is a diagram illustrating an example of setting a lead operation time based on delay factors.
FIG. 36 is a flowchart illustrating switching between execution and non-execution of engagement timing prediction according to an eighth embodiment.
FIG. 37 is a diagram comparing the number of binarized pulses of a booming waveform according to vehicle speed.
FIG. 38 is a diagram illustrating a relationship among vehicle speed, detectable rotational speed difference, and phase difference detection time.
FIG. 39 is a diagram illustrating switching between execution and non-execution of engagement timing prediction according to vehicle speed.
FIG. 40 is a diagram illustrating switching between execution and non-execution of engagement timing prediction based on other parameters.

### DETAILED DESCRIPTION

Dog clutch engagement control system according to various embodiments of the present disclosure will be described with reference to the drawings. A basic system configuration in first to eighth embodiments is the same, but control configuration by a controller differs. The first to eighth embodiments are collectively referred to as a present embodiment. The control system of the present embodiment predicts a future engagement timing of a dog clutch provided in a vehicle powertrain system while the clutch is in a disengaged state. The dog clutch reliably transmits power through mechanical meshing of claws or teeth. Then, in accordance with the prediction result, a clutch actuator is driven to engage the dog clutch.

### <Vehicle, and Dog Clutch Engagement Control System>

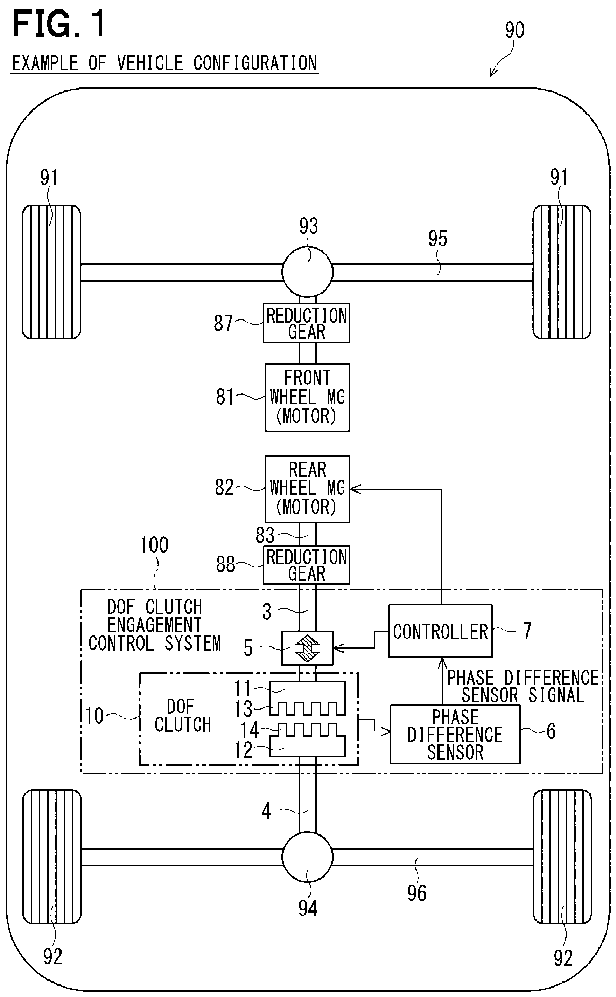

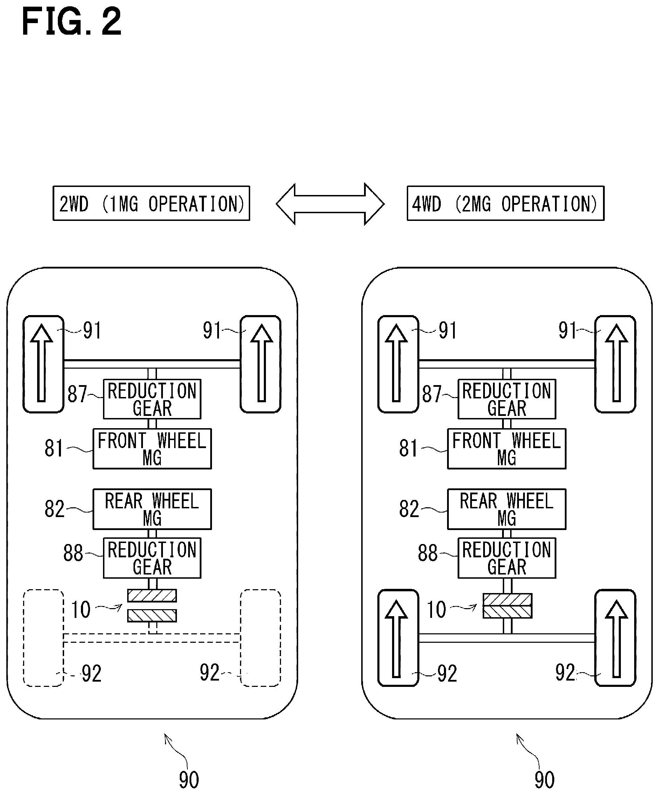

A description will be given of an example vehicle configuration to which the control system of the present invention is applied, in a vehicle as shown in FIGS. 1 and 2. In this example, the vehicle is an electric vehicle equipped with two motor generators (motor generator 81 and motor generator 82) as power sources for front-wheel drive and rear-wheel drive. The motor generator 81 and the motor generator 82 each function both as a drive motor and as a generator. This vehicle is capable of switching between two-wheel drive (2WD), in which only front wheels are driven, and four-wheel drive (4WD), in which both front wheels and rear wheels are driven.

The front-wheel motor generator 81 is always connected to the front wheels 91 via a differential gear 93 and a connecting shaft 95. Accordingly, the front wheels 91 always serve as drive wheels. On the other hand, the dog clutch 10 is provided in a power transmission path from the rear-wheel motor generator 82 to rear wheels 92. In an example shown in FIG. 1, the dog clutch 10 is provided between the rear-wheel motor generator 82 and a differential gear 94. However, the dog clutch 10 may alternatively be provided on the rear wheel 92 side relative to the differential gear 94.

When the dog clutch 10 is in a disengaged state, the rear-wheel motor generator 82 is not connected to the rear wheels 92, and the rear wheels 92 rotate as driven wheels following the front wheels 91. When the dog clutch 10 is in an engaged state, the rear-wheel motor generator 82 is connected to the rear wheels 92 via the differential gear 94 and a connecting shaft 96. At this time, in addition to the front wheels 91, the rear wheels 92 also become drive wheels. It should be noted reduction gears 87 and 88 may be provided on output shafts of the front-wheel motor generator 81 and the rear-wheel motor generator 82, respectively.

In this way, by switching between the disengaged and engaged states of the dog clutch 10, the vehicle 90 can be switched between 2WD and 4WD. For example, single-motor 2WD driving is selected on flat roads with low load, while dual-motor 4WD driving is selected on slopes where high driving force is required. When switching from 4WD to 2WD, it is necessary to reduce drag loss by disengaging the clutch, thereby improving electric power efficiency. Conversely, when switching from 2WD to 4WD, it is required to achieve favorable acceleration response by having a drive control device quickly engage the dog clutch 10. If the engagement operation of the dog clutch 10 is delayed, torque response of the rear-wheel motor generator 82, which has previously been disconnected, will also be delayed. As a result, the torque response of the entire vehicle 90 will be delayed. In such a case, when the driver operates an accelerator pedal, a response delay in torque output occurs, which adversely affects the driving performance (driveability) of the vehicle 90.

When an upper-level vehicle control unit (not shown) determines, based on vehicle's operating conditions, external environments such as a road surface, or driver instructions, that a switch from 2WD to 4WD is necessary, it sends an engagement command to the control system 100. When the control system 100 receives the engagement command while the dog clutch 10 is disengaged, it engages the dog clutch 10. The control system 100 includes the dog clutch 10, a clutch actuator 5, a phase difference sensor 6, and a controller 7. In the following drawings, the clutch actuator 5 may be referred to as "ACT" as appropriate.

The dog clutch 10 includes a first clutch member 11 connected to an input shaft 3 and a second clutch member 12 connected to an output shaft 4. The first clutch member 11 has first engagement teeth 13 arranged in a circumferential direction and rotates about a shaft axis of the input shaft 3. The second clutch member 12 has second engagement teeth 14 in a circumferential direction, which can directly mesh with the first engagement teeth 13, and rotates coaxially and in the same direction as the first clutch member 11. In the configuration example of FIG. 1, a reduction gear 88 is provided between the rear-wheel motor generator 82 and the first clutch member 11. The rotation of the motor shaft 83 of the rear-wheel motor generator 82 is decelerated by the reduction gear 88 and transmitted to the input shaft 3.

The clutch actuator 5 moves the first clutch member 11 and the second clutch member 12 relative to each other in an axial direction. The clutch actuator 5 may be provided not only on the first clutch member 11, but also on the second clutch member 12. When the clutch actuator 5 moves the first clutch member 11 and the second clutch member 12 toward each other, the first engagement teeth 13 and the second engagement teeth 14 mesh with each other, resulting in an engaged state of both clutch members 11 and 12. On the other hand, when the clutch actuator 5 moves the first clutch member 11 and the second clutch member 12 away from each other, the meshing of the first engagement teeth 13 and the second engagement teeth 14 is released, and both clutch members 11 and 12 are brought into a disengaged state. That is, by the axial relative movement of the first clutch member 11 and the second clutch member 12 performed by the clutch actuator 5, the engaged state and the disengaged state of the first clutch member 11 and the second clutch member 12 can be selectively switched. It should be noted that a sliding sleeve type clutch, which is different from the clutch described here, will be described in detail in the section of Other Embodiments.

When the dog clutch 10 is in the disengaged state and the input shaft 3 and the output shaft 4 are rotating at different rotational speeds, the phase difference sensor 6 detects a phase difference between the first clutch member 11 and the second clutch member 12. Here, the phase difference between the first clutch member 11 and the second clutch member 12 corresponds to a phase difference between the input shaft 3 and the output shaft 4. The phase difference sensor 6 outputs a phase difference sensor signal, which is based on the detected phase difference, to the controller 7. The control system 100 according to the present embodiment is mounted in the vehicle 90, in which the output shaft 4 is connected to the rear wheel 92, which functions as the drive wheel.

A period during which the dog clutch 10 is capable of engagement is referred to as an "engagement timing". The engagement timing includes not only a single period in which the dog clutch 10 actually performs an engagement operation, but also multiple periods in which the dog clutch 10 is capable of engagement but passes without engaging. The controller 7 detects, based on the phase difference sensor signal, any past engagement timing of the dog clutch 10. Furthermore, the controller 7 predicts future engagement timing by a method described later. The controller 7 drives the clutch actuator 5 in accordance with the predicted future engagement timing. More specifically, the controller 7 outputs a drive instruction to the clutch actuator 5 at a time preceding the future engagement timing by an advance operation time t_ad. In addition, the controller 7 controls the rotational speed of the input shaft 3 by driving and controlling the rear-wheel motor generator 82.

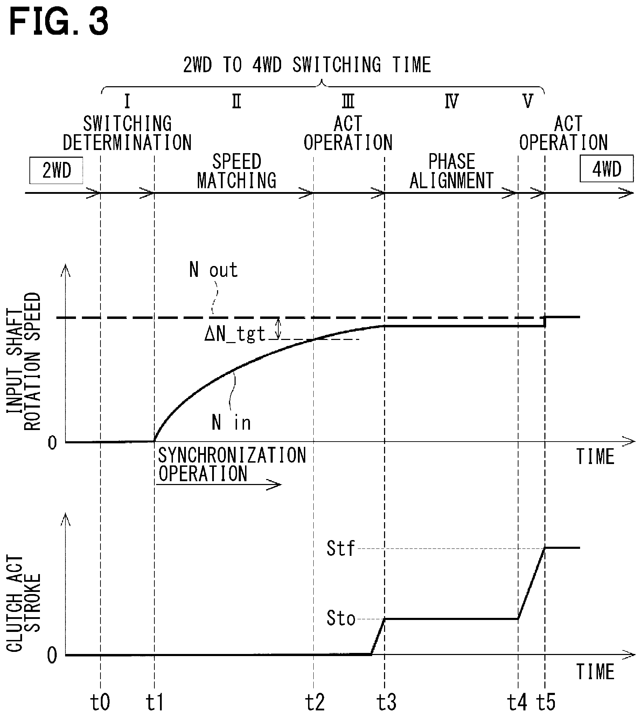

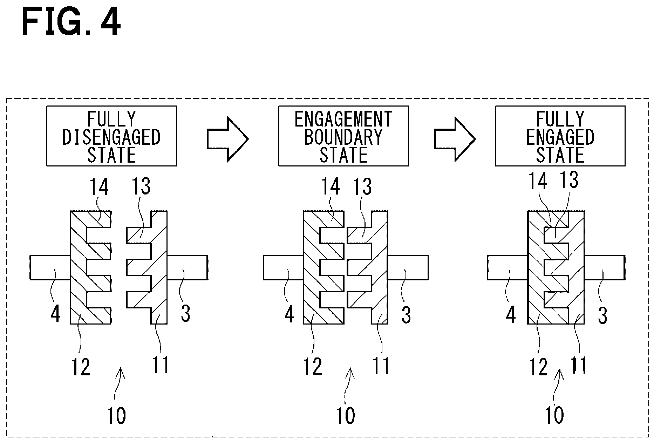

Referring to FIGS. 3 and 4, a general engagement operation during switching from 2WD to 4WD will be described. FIG. 3 shows changes in the rotational speeds of the input and output shafts, as well as in a clutch actuator stroke. The rotational speed of the output shaft corresponds to the rotational speed of the axle of the vehicle, which is proportional to the vehicle speed. During period I from time point t0 to t1, the controller 7 receives a switching instruction and determines start of the switching operation. Upon receiving the switching instruction from 2WD to 4WD, an engagement command to engage the disengaged dog clutch is generated.

In response to the engagement command, during period II from time point t1 to t2, the controller 7 drives the rear-wheel motor generator 82, increasing the rotational speed Nin of the input shaft 3 toward the rotational speed Nout of the output shaft 4 so as to synchronize the rotation of the input shaft with that of the output shaft. This operation of matching the rotational speeds of the input and output shafts is referred to as synchronization operation. During periods I and II, the dog clutch 10 is in a fully disengaged state as shown in FIG. 4. It should be noted that symbols such time point as t0, t1, etc. on a time axes of the following timing charts are used independently for each figure.

A target rotational speed difference ΔN_tgt between the input shaft rotational speed and the output shaft rotational speed is set to reflect an allowable limit of engagement shock when the dog clutch 10 is engaged. When the rotational speed difference between the input and output shafts reaches the target speed difference ΔN_tgt or less at time point t2, a drive command is output to the clutch actuator 5. During period III from time point t2 to t3, the clutch stroke changes from 0 to Sto, and the dog clutch 10 transitions from the fully disengaged state shown in FIG. 4 to an engagement boundary state.

During period IV from time point t3 to t4, phase alignment of the clutch members 11 and 12 is performed. A time span required for phase alignment may be prolonged depending on an initial phase of the dog clutch 10. When the phase alignment is completed, during period V from time point t4 to t5, the clutch stroke changes from Sto to Stf, and the dog clutch 10 transitions from the engagement boundary state to a fully engaged state shown in FIG. 4.

Of a total switching time, which is the sum of periods I to V, the time span for speed synchronization in period II and the time span for phase alignment in period IV are predominant. It is known that conventional technology shortens the phase alignment time by predicting the engagement timing based on the phase difference sensor signal. The purpose of the present embodiment is to further shorten the phase alignment time compared to the conventional technology, thereby achieving highly responsive switching from 2WD to 4WD through the clutch engagement.

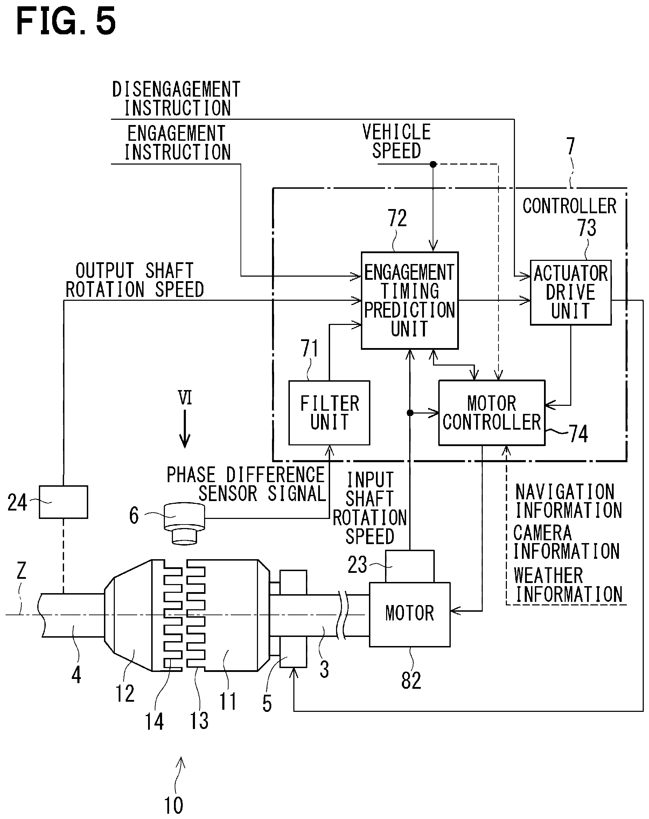

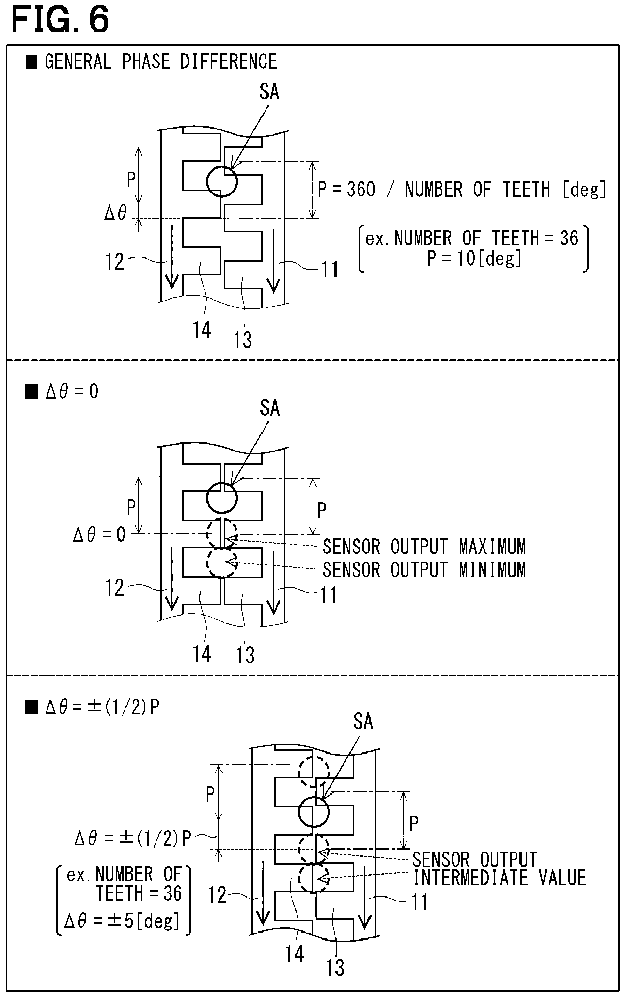

With reference to FIGS. 5 and 6, a configuration of the dog clutch engagement control system according to the present embodiment will be described. In FIG. 5 and the subsequent descriptions, attention is focused solely on clutch engagement on the rear wheel 92 side of the vehicle 90, and since regenerative operation of the motor generator is not addressed, the rear-wheel motor generator 82 is simply referred to as "motor 82." The rotational speed of the motor 82 is detected by a rotational speed sensor 23 such as a resolver, and is converted to the rotational speed of the input shaft 3 by multiplying it by the reduction ratio of the reduction gear 88. In FIG. 5, it is assumed that the converted input shaft rotational speed is input to an engagement timing prediction unit 72 of the controller 7. On the other hand, the rotational speed of the output shaft 4 is detected by a rotational speed sensor 24 such as a wheel speed sensor, and the converted value is input to the engagement timing prediction unit 72. Hereinafter, the reference numerals for "input shaft 3" and "output shaft 4" related to rotational speed will be omitted as appropriate.

The phase difference sensor 6 is composed of, for example, a magnetic detection element such as a Hall element and a magnet. The phase difference sensor 6 has a detection range SA (see FIG. 6) that spans axial positions of the first engagement teeth 13 and the second engagement teeth 14, and is arranged to face a clutch axis Z from the radially outer side so as not to interfere with the dog clutch 10. The phase difference sensor 6 detects a total area of the first engagement teeth 13 and the second engagement teeth 14 passing through the detection range SA during rotation, based on changes in magnetic flux density.

A pitch angle P is an angle obtained by dividing the rotational angle of one revolution (i.e., 360 degrees) of the first clutch member 11 and the second clutch member 12 by the number of teeth. For example, the number of teeth of the first engagement teeth 13 and the second engagement teeth 14 is 36, and the pitch angle P is 10 degrees. In FIG. 6 and the following FIGS., a configuration example with 36 teeth is assumed, and the phase difference range is shown as ±5 degrees.

An upper diagram in FIG. 6 shows a general phase difference Δθ during rotation. A middle diagram shows a state in which the rotational phases of the first engagement teeth 13 and the second engagement teeth 14 coincide, that is, a "phase difference Δθ = 0." In this state, the first clutch member 11 and the second clutch member 12 cannot engage with each other. When the tooth portion of the first engagement tooth 13 and the tooth portion of the second engagement tooth 14 are both present within the detection range SA, the total area within the detection range becomes maximum. At this timing, the output of the phase difference sensor 6 reaches its maximum. Conversely, when the void portions (areas where teeth are absent) of both the first engagement tooth 13 and the second engagement tooth 14 are present within the detection range SA, the total area becomes minimum. In this case, the output of the phase difference sensor 6 becomes minimum.

A bottom diagram in FIG. 6 shows a state in which the rotational phase of the first engagement teeth 13 and the second engagement teeth 14 is offset by half of the pitch angle P, that is, a "phase difference Δθ = ± (1/2) P (= ±5 deg)." In this state, the first clutch member 11 and the second clutch member 12 can be engaged with each other. Within the detection range SA, when the tooth portion of either the first engagement tooth 13 or the second engagement tooth 14 and the void portion of the other are both included, the total area within the detection range SA is at an intermediate value between the maximum and minimum. At this timing, the output of the phase difference sensor 6 is also at an intermediate value.

Returning to FIG. 5, the controller 7 includes a filter unit 71, the engagement timing prediction unit 72, an actuator drive unit 73, and a motor controller 74. The filter unit 71 filters the output of the phase difference sensor 6 to remove fluctuation components in a predetermined frequency range. As a result, the phase difference sensor output signal after filtering is input to the prediction unit 72. A node portion of a beat waveform in the phase difference sensor output signal corresponds to the engagement timing. The filter unit 71 may be configured as a circuit using filter elements, or may be implemented in software. A relationship between a time constant of the filter processing and an advance operation time t_ad will be described later in a seventh embodiment.

The prediction unit 72 acquires the phase difference sensor signal after filtering, the input shaft rotational speed, and the output shaft rotational speed. When the prediction unit 72 receives an engagement instruction while the dog clutch 10 is released, it causes the motor 82 to rotate via the motor controller 74, and initiates a synchronization operation to increase the input shaft rotational speed to the target rotational speed. The prediction unit 72 also stores, internally, an estimated rotational speed map, which will be described later. The prediction unit 72 predicts the future engagement timing based on the phase difference sensor signal and the estimated rotational speed, and outputs a drive instruction to the actuator drive unit 73.

Furthermore, in a sixth embodiment, for example, the motor controller 74 sets a target idle rotational speed based on factors such as vehicle speed, navigation information, information from a front-facing vehicle camera, and weather information. Details will be described later.

The actuator drive unit 73 drives the clutch actuator 5 in a forward direction at a timing instructed by the prediction unit 72, thereby engaging the dog clutch 10. Additionally, when the actuator drive unit 73 receives a release instruction from the higher-level vehicle controller, it drives the clutch actuator 5 in a reverse direction, thereby disengaging the dog clutch 10.

For convenience, in FIG. 5, the motor controller 74 is shown as part of the controller 7. However, in reality, a controller of the dog clutch engagement control system 100 and a controller of a separate motor generator functionally cooperate to constitute the controller 7. The motor generator control unit mainly performs drive control for the running and regenerative operations of the rear wheel 92 after the clutch is engaged. This controller of the separate motor generator is executed by operating an inverter to control the power supply from the power source to the motor 82. On the other hand, the motor controller 74 is responsible for controlling the rotational speed of the input shaft during the synchronization operation before the clutch is engaged. That is, among the multiple functions provided by the motor generator control unit, at least those related to the synchronization operation correspond to the functions of the motor controller 74.

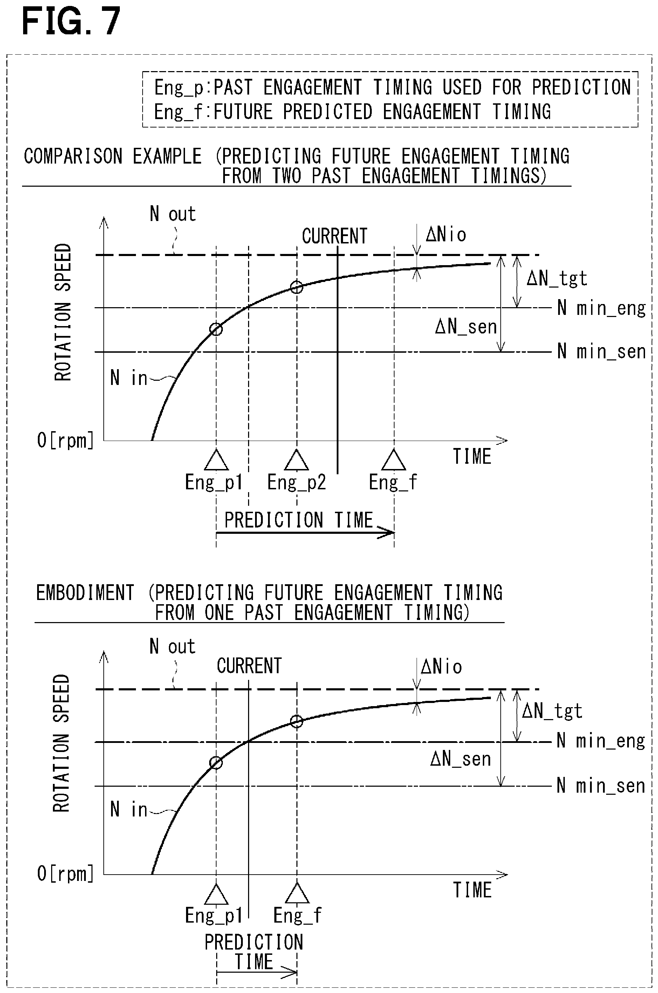

Next, with reference to FIG. 7, a description will be given, as a comparative example of the conventional technology. In the comparative example technology, while the rotational speed of the motor is increasing toward the rotational speed of the axle, the controller stores the past engagement timings (meshing timings Tp) of two or more occasions based on the output of the phase difference sensor signal, and calculates an approximation line passing through each of these points. The controller predicts a future engagement timing (meshing timing Tf) along the approximation line, and adds a correction value Cv, corresponding to the rotational speed difference, to the predicted value.

During the synchronization operation, as the input shaft rotational speed Nin increases toward the output shaft rotational speed Nout, the input-output shaft rotational speed difference ΔNio decreases. When the input shaft rotational speed Nin reaches a minimum detectable rotational speed Nmin_sen, phase difference detection at a sampling interval of the phase difference sensor 6 becomes possible. The input-output shaft rotational speed difference ΔNio at this time is expressed as a detectable rotational speed difference ΔN_sen. Furthermore, when the input shaft rotational speed Nin reaches a minimum engagement-capable rotational speed Nmin_eng, engagement becomes possible within a permissible limit of engagement shock. The input-output shaft rotational speed difference ΔNio at this time is expressed as a target rotational speed difference ΔN_tgt. The rotational speed difference is defined as zero or a positive value.

In the following description, "current" refers to a timing at which the future engagement timing is predicted during the execution of the synchronization operation. When a prediction is made at the current time using information that has just been obtained, the information used is regarded as "past" information. The current input shaft rotational speed needs to be equal to or higher than the minimum engagement-allowable rotational speed Nmin_eng.

In FIG. 7 and subsequent figures, the past engagement timing used for prediction is denoted by a symbol "Eng_p," and the predicted future engagement timing is denoted by a symbol "Eng_f." An upper diagram in FIG. 7 shows, as the comparative example, the prediction time when the future engagement timing is predicted based on the past two engagement timings. The first and second past engagement timings are denoted as "Eng_p1" and "Eng_p2," respectively.

At present, after the two past engagement timings Eng_p1 and Eng_p2 have been detected, the future engagement timing Eng_f is predicted from the approximate line calculated by a computing device. In the comparative example, since the history of at least two past engagement timings is required, prediction takes time. Therefore, it may not be possible to achieve a highly responsive clutch operation, leading to a potential decrease in drivability.

The purpose of the present embodiment is to shorten the prediction time for the future engagement timing Eng_f by reducing the number of past engagement timings used for prediction. Therefore, the objective of problem-solving in the present embodiment, as shown in the figure below, is to predict the future engagement timing Eng_f from the single most recent past engagement timing Eng_p and thereby shorten the prediction time. For this purpose, instead of adopting the conventional method of calculating an approximation line from multiple past engagement timings, the present embodiment utilizes the estimated rotational speed of the input shaft. The controller of the present embodiment predicts the future engagement timing by using the most recent past engagement timing and the estimated rotational speed of the input shaft. By driving the clutch actuator based on the predicted future engagement timing, the responsiveness of the clutch engagement is improved and drivability is enhanced.

However, the controller 7, upon receiving an engagement command, does not always predict the future engagement timing. The controller 7 of the present embodiment predicts the future engagement timing using the above method when predetermined prediction execution conditions are satisfied. Examples of the fulfillment and non-fulfillment of the prediction execution conditions will be described later in the eighth embodiment.

### First Embodiment

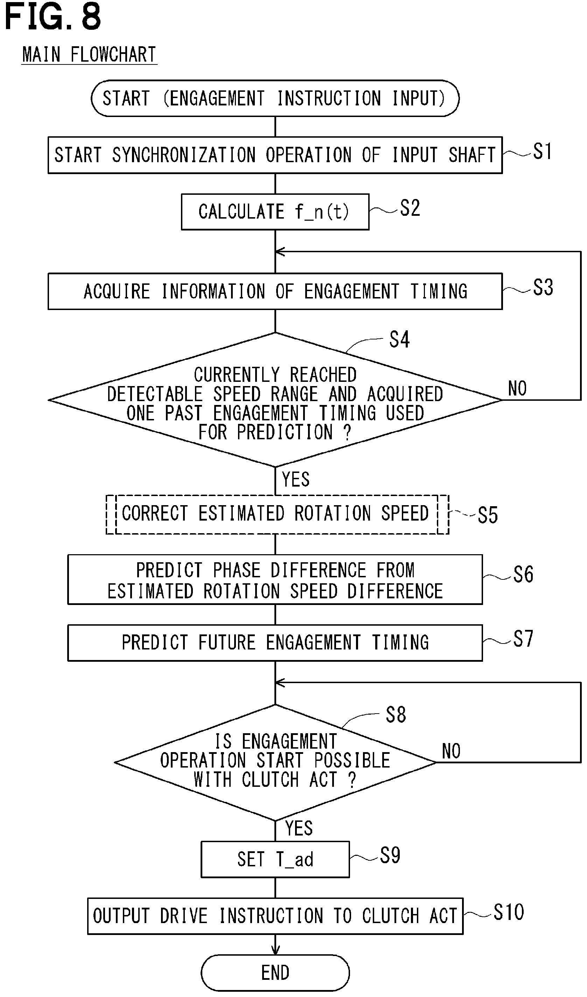

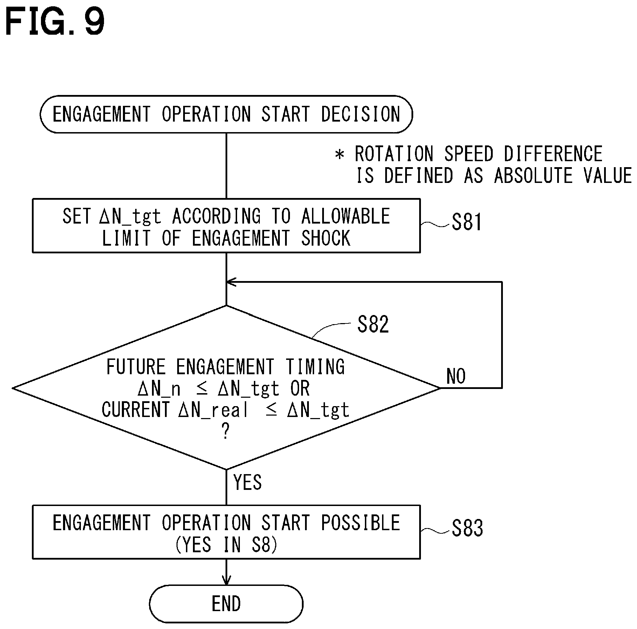

Next, the specific configurations of multiple embodiments of the dog clutch engagement control system 100 will be described. The first and second embodiments represent two fundamental technologies that serve as main, while the third to eighth embodiments represent applied technologies that are appropriately added to the first and second embodiments. First, with reference to flowcharts in FIGS. 8 and 9, basic steps of clutch engagement control common to each embodiment will be described. In the following flowchart, a symbol S indicates a step. Step S5, indicated by a dashed line, is not executed in the first embodiment, but is executed in the second embodiment.

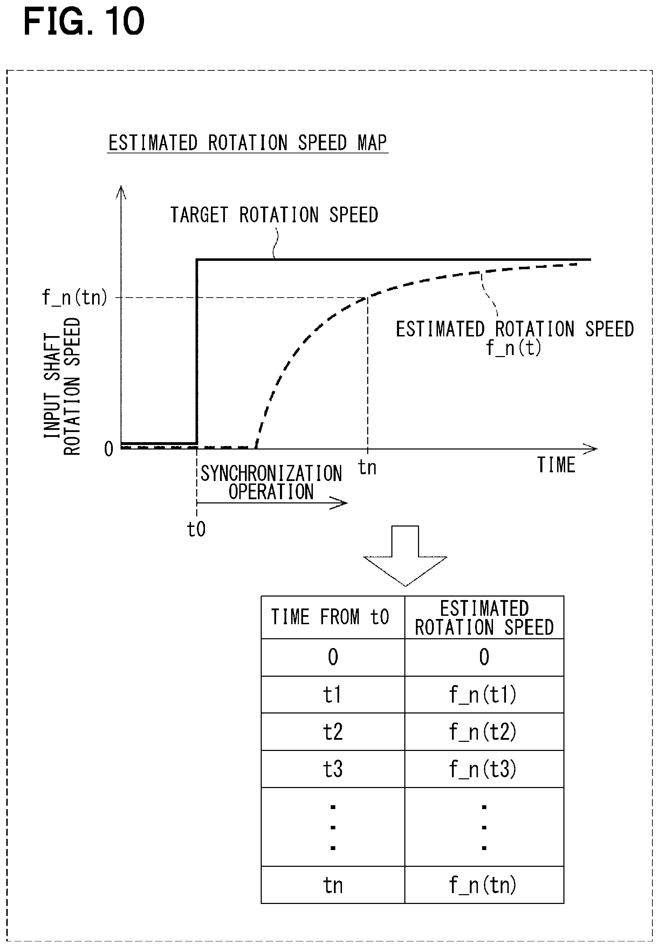

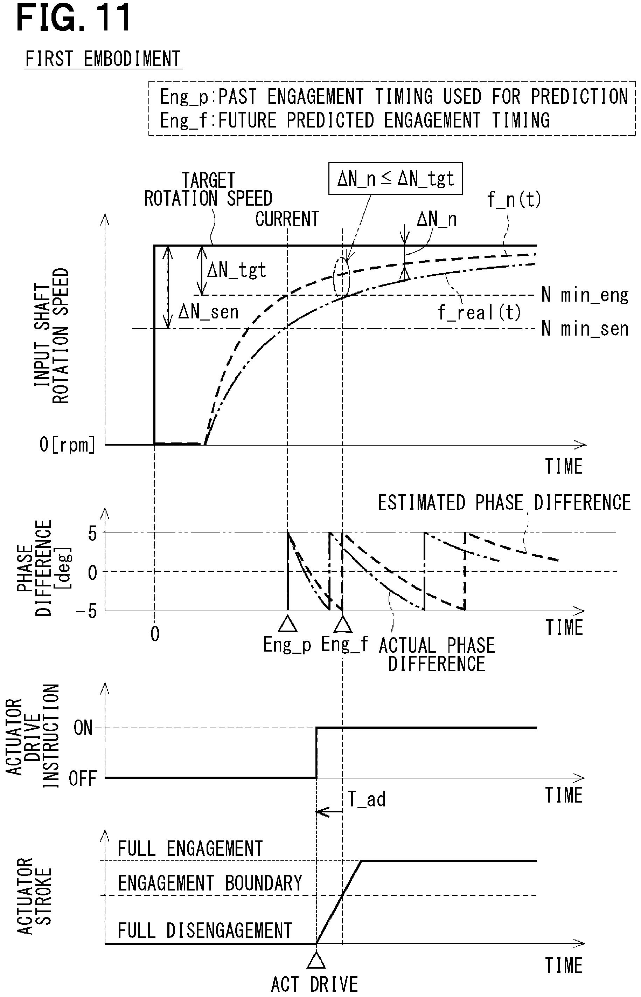

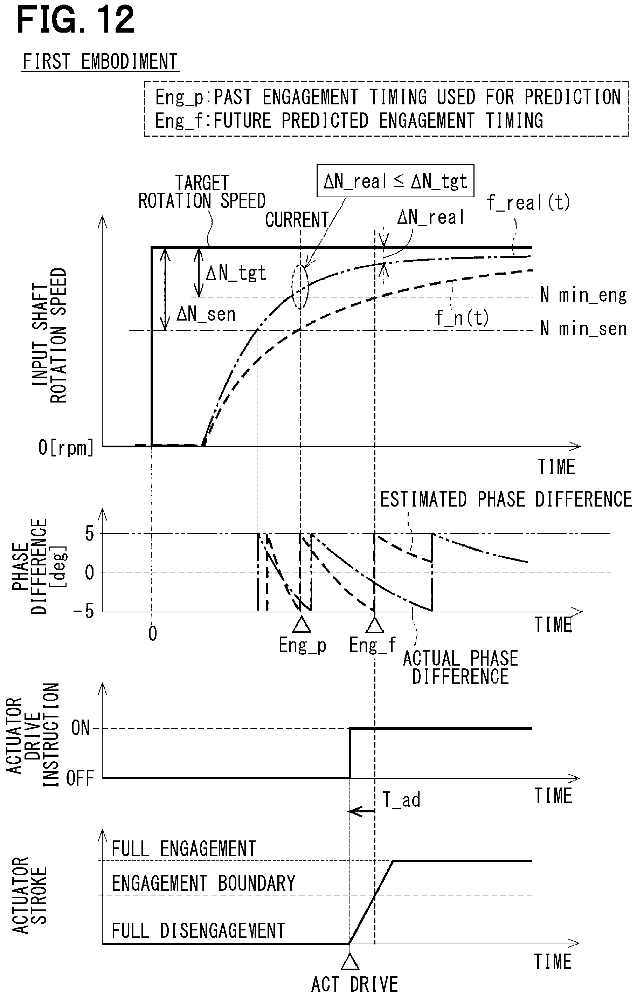

In conjunction with the explanation of the flowcharts, reference will be made to the estimated rotational speed map in FIG. 10 and the time charts in FIGS. 11 and 12. Of four diagrams in FIGS. 11 and 12, the topmost diagram shows variation in the input shaft rotational speed. In the present embodiment, the output shaft rotational speed (i.e., vehicle speed) is basically constant, and the input shaft rotational speed increases toward a "target rotational speed," which corresponds to the output shaft rotational speed. In the time chart of the synchronization operation, the "rotational speed" that varies with time point t is the input shaft rotational speed. An actual input shaft rotational speed is denoted as "actual rotational speed f_real(t)," and the input shaft rotational speed estimated from the output characteristics of the motor 82 is denoted as "estimated rotational speed f_n(t)."

Ideally, the estimated rotational speed f_n(t) should coincide with the actual rotational speed f_real(t), however, in reality, there may be cases where they do not match. FIG. 11 shows a case where the estimated rotational speed f_n(t) exceeds the actual rotational speed f_real(t), and FIG. 12 shows a case where the estimated rotational speed f_n(t) is lower than the actual rotational speed f_real(t).

In addition, a difference between the target rotational speed and the estimated rotational speed is denoted as "estimated rotational speed difference ΔN_n," and a difference between the target rotational speed and the actual rotational speed is denoted as "actual rotational speed difference ΔN_real." Definitions of the minimum detectable rotational speed Nmin_sen, the minimum engageable rotational speed Nmin_eng, the detectable rotational speed difference ΔN_sen, and the target rotational speed difference ΔN_tgt are in accordance with FIG. 7.

Of the four diagrams in FIGS. 11 and 12, a second diagram from the top shows change in phase difference. As described above with reference to FIG. 6, in the case where the number of teeth is 36, the phase difference Δθ varies within a range of ±5 degrees centered on 0 degrees. When the rotational speed difference becomes equal to or less than the minimum detectable rotational speed Nmin_sen, the timing at which Δθ = ±5 deg occurs is detected as the previous engagement timing Eng_p used for prediction. In addition, based on the estimated rotational speed, the estimated phase difference indicated by the dashed line is calculated. After the present moment, a timing at which the estimated phase difference reaches ±5 degrees is predicted as the future engagement timing Eng_f.

Of the four diagrams in FIGS. 11 and 12, a third diagram from the top shows the ON/OFF status of the drive instruction by the actuator drive unit 73. The bottom diagram shows the stroke of the clutch actuator 5. The clutch actuator 5 begins to operate at a timing that is earlier than the future engagement timing Eng_f by the advance operation time t_ad.

The main flowchart of FIG. 8 starts with the engagement command input at time point t0. At this time, the target rotational speed of the input shaft rises stepwise from zero. In step S1, the synchronization operation of the input and output shafts is started. In step S2, the estimated rotational speed f_n(t) of the input shaft is calculated. As shown in FIG. 10, the estimated rotational speed f_n(t) is stored in an estimated rotational speed map, which expresses step response with respect to the target rotational speed as a function of time t. The estimated rotational speed of the input shaft at time point tn from the engagement instruction time point t0 is expressed as f_n(tn).

The estimated rotational speed may be calculated using a mathematical formula, or a nominal response performance value of the motor 82 may be applied. Since the target rotational speed correlates with the vehicle speed, a plurality of estimated rotational speed maps are stored in accordance with the vehicle speed. In addition, a plurality of maps may be stored corresponding to the temperature or drive voltage of the motor 82. By using an estimated rotational speed map corresponding to conditions, an error between the map value and the actual rotational speed behavior is reduced, thereby improving the accuracy of engagement timing prediction in S7.

In S3, the engagement timing prediction unit 72 acquires information on the engagement timing at least once. In S4, it is determined whether a difference between the current actual rotational speed and the target rotational speed is equal to or less than the detectable rotational speed difference ΔN_sen, and whether the engagement timing of the previous cycle, which will be used for predicting the future engagement timing, has been acquired. When the result in S4 is NO, the process returns to before S3, and S3 is repeated until a YES decision is made in S4.

S5, indicated by a broken line, will be described later in the second embodiment. In S6, the prediction unit 72 predicts the future phase difference based on the estimated rotational speed difference, which is the difference between the estimated rotational speed and the target rotational speed. The phase difference at each future point in time is calculated as the sum of the current phase difference and the cumulative phase difference, which is obtained by integrating the estimated rotational speed difference from the present toward the future. The calculation formula for the cumulative phase difference employs the formula for phase difference calculation in the phase difference undetectable region, which will be described later in the third embodiment.

In S7, the prediction unit 72 predicts, as the future engagement timing, a timing at which the predicted phase difference becomes "Δθ = ±P / 2" (see FIG. 6), which is the engagement-permissible timing. In the example shown in FIG. 11, the engagement-permissible timing closest to the present is predicted as the future engagement timing. However, it is not limited to the engagement-permissible timing closest to the present, the second or subsequent engagement-permissible timing from the present may also be predicted as the future engagement timing.

In S8, it is determined whether the engagement operation of the clutch actuator 5 can be started. FIG. 9 shows a sub-flowchart of the engagement operation start determination. In S81, a target rotational speed difference ΔN_tgt corresponding to the allowable limit of engagement shock is set. Here, in the present embodiment, for the sake of simplification, it is assumed that the vehicle speed, i.e., the output shaft rotational speed, remains constant during the synchronization operation. However, in practice, it is also possible for the vehicle to accelerate or decelerate during the synchronization operation. The approach for determining the target rotational speed difference ΔN_tgt in such cases will be described in the section "Other Embodiments."

In S82, it is determined whether either of the following two conditions, A or B, is satisfied. The difference in rotational speed is compared based on its absolute value.
Condition A: Estimated rotational speed difference at the future engagement timing ΔN_n ≤ target rotational speed difference ΔN_tgt
Condition B: Current actual rotational speed difference ΔN_real ≤ target rotational speed difference ΔN_tgt

In the example of FIG. 11, where the estimated rotational speed exceeds the actual rotational speed, Condition B is not satisfied, but Condition A is satisfied. In the example of FIG. 12, where the estimated rotational speed is lower than the actual rotational speed, Condition A is not satisfied, but Condition B is satisfied.

The determination in S82 is repeated until it is determined to be YES. When the determination in S82 is YES, it is determined in S83 that the engagement operation can be started. Then, the process returns to the main flowchart of FIG. 8, and YES is determined in S8.

In S9, the prediction unit 72 sets the advance operation time point t_ad according to the delay time until the clutch actuator 5, upon receiving a drive instruction, transitions from the released state to the engagement boundary state (see FIG. 4). The standard advance operation time point t_ad is stored as a default value. In a seventh embodiment, the advance operation time point t_ad is calculated each time based on parameters. In S10, the actuator drive unit 73 outputs the drive instruction to the clutch actuator 5 at a timing advanced by the advance operation time point t_ad with respect to the predicted future engagement timing.

### Second Embodiment

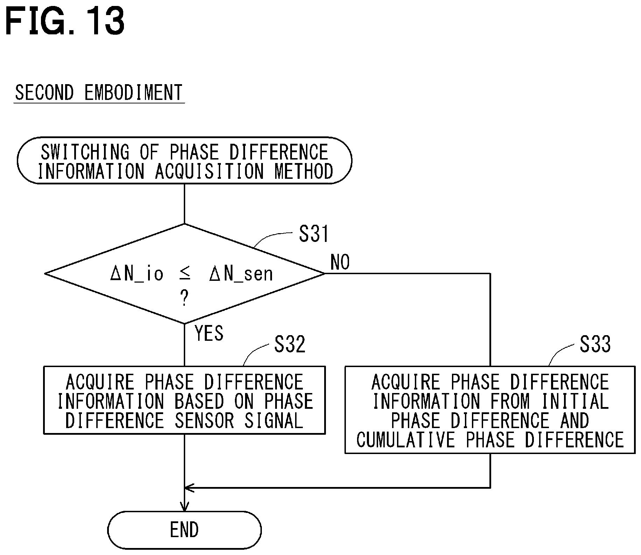

With reference to FIGS. 13 to 15, switching of means for acquiring phase difference information according to a second embodiment will be described. As described above with reference to FIG. 11 and the like, unless the input shaft rotational speed Nin is at least the minimum detectable rotational speed Nmin_sen and the input/output shaft rotational speed difference does not fall below the detectable rotational speed difference ΔN_sen, it is not possible for the phase difference sensor 6 to detect the phase difference. In other words, since the start of engagement timing prediction depends on the detectable rotational speed difference ΔN_sen, the prediction of the engagement timing is delayed. Furthermore, when the input/output shaft rotational speed difference exceeds the detectable rotational speed difference ΔN_sen during t engagement timing prediction, the prediction cannot be continued.

In the second embodiment, the controller 7 serves as the main agent for operation. The controller 7 performs processing when a predetermined prediction execution condition is satisfied during execution of the synchronization operation. The controller 7 determines, based on the current difference between the rotational speed of the input shaft and the rotational speed of the output shaft, whether phase difference detection by the phase difference sensor is possible. The controller 7 switches the phase difference information acquisition means according to the result of this determination. More specifically, the controller 7 calculates an estimated phase difference using the initial phase difference between the input shaft and the output shaft at the start of the synchronization operation, and the cumulative phase difference based on a time integral value of the rotational speed difference between the input shaft and the output shaft measured during the synchronization operation. When the phase difference detection by the phase difference sensor is possible, the controller 7 detects the engagement timing based on the output signal from the phase difference sensor. When the phase difference detection by the phase difference sensor is not possible, the controller 7 estimates the engagement timing based on the estimated phase difference. The controller 7 switches between these two means and applies the appropriate one.

The flowchart in FIG. 13 is related to step S3 "Acquisition of engagement timing information" in the main flowchart of FIG. 8, and includes steps S31 to S33. In S31, it is determined whether the input-output shaft rotational speed difference ΔNio is equal to or less than the detectable rotational speed difference ΔN_sen. When the result in S31 is YES, then in S32, the prediction unit 72 acquires phase difference information based on the phase difference sensor signal. When the result in S31 is NO, then in S33, the prediction unit 72 acquires phase difference information from the initial phase difference and the cumulative phase difference obtained by integrating the input-output shaft rotational speed difference.

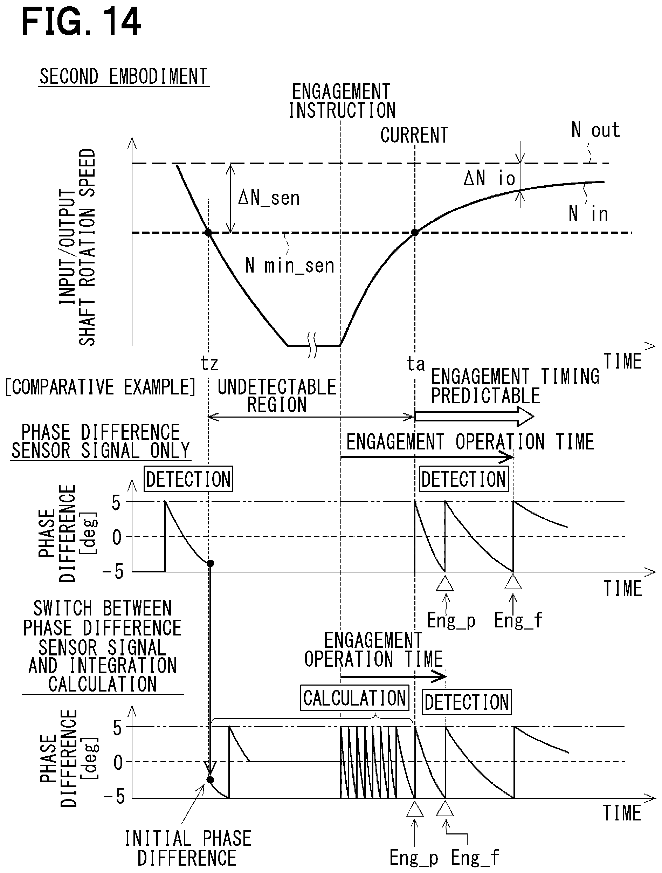

With reference to the timing chart of FIG. 14, transition of the phase difference information acquisition means will be described for the process in which the input-output shaft rotational speed difference ΔNio increases from a state equal to or less than the detectable rotational speed difference ΔN_sen to the detectable rotational speed difference ΔN_sen, and then returns again to a value equal to or less than ΔN_sen. A middle diagram of FIG. 14 shows control in a comparative example in which the means for acquiring phase difference information relies solely on the phase difference sensor signal. A lower diagram of FIG. 14 shows control in the second embodiment, in which the means for acquiring phase difference information switches between the phase difference sensor signal and integration calculation of the input-output shaft rotational speed difference.

While the input shaft rotational speed Nin is decreasing toward zero, at time point tz, the input-output shaft rotational speed difference ΔNio exceeds the detectable rotational speed difference ΔN_sen. While the input shaft rotational speed Nin is rising again after receiving an engagement instruction following the stop of the input shaft, at time point ta, the input-output shaft rotational speed difference ΔNio becomes equal to or less than the detectable rotational speed difference ΔN_sen. A period from time point tz to time point ta is an undetectable region. In the comparative example, after the engagement instruction, it becomes possible to predict the engagement timing only after passing through the undetectable region. Thereafter, the future engagement timing Eng_f is predicted using the previous engagement timing Eng_p.

In contrast, in the second embodiment, the phase difference sensor detection value immediately before time point tz is stored as the initial phase difference. In addition, during rotation of the input shaft within the undetectable region, a converted value of the input-output shaft rotational speed difference ΔNio is subjected to integration processing to calculate the cumulative phase difference, and a value obtained by adding the cumulative phase difference to the initial phase difference is estimated as the phase difference. Therefore, at time point ta, it becomes possible to predict the future engagement timing Eng_f using the most recent engagement timing Eng_p. As a result, it may be possible to predict the future engagement timing Eng_f earlier than in the comparative example.

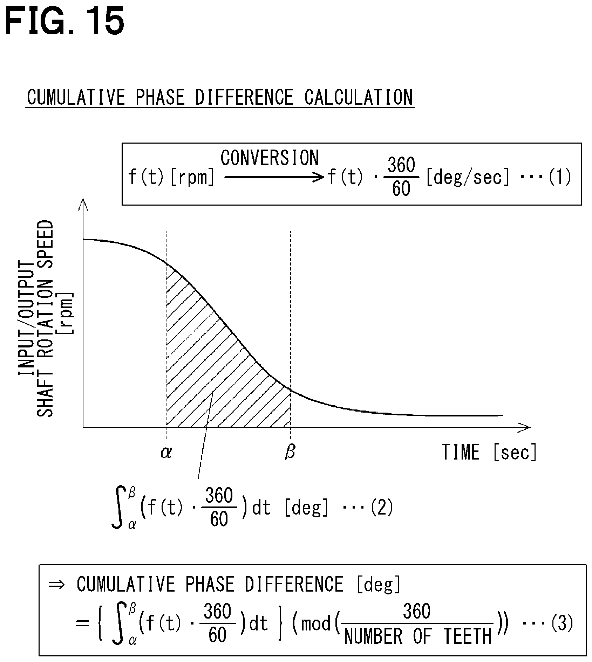

With reference to FIG. 15, an example of the calculation of the cumulative phase difference will be described. The input-output shaft rotational speed difference is expressed as a function of time, f(t). According to equation (1) in FIG. 15, the rotational speed difference f(t) [rpm] is divided by the number of teeth and converted to a phase change per unit time [deg/sec]. According to equation (2) in FIG. 15, the input-output shaft rotational speed difference is integrated over an interval from time point α to time point β. As shown in equation (3) of FIG. 15, the remainder obtained by dividing the integral value of the input-output shaft rotational speed difference by the pitch angle P (= 360/number of teeth), that is, mod(360/number of teeth), is calculated as the cumulative phase difference. It is also possible to apply a Hilbert transform to the input-output shaft rotational speed difference.

In the second embodiment, in the undetectable region where the input-output shaft rotational speed difference ΔNio exceeds the detectable rotational speed difference ΔN_sen, the phase difference is estimated by integrating the input-output shaft rotational speed difference, thereby shortening the time required to predict the future engagement timing. As a result, the total clutch engagement time from the start of the synchronization operation can be shortened.

### Third Embodiment

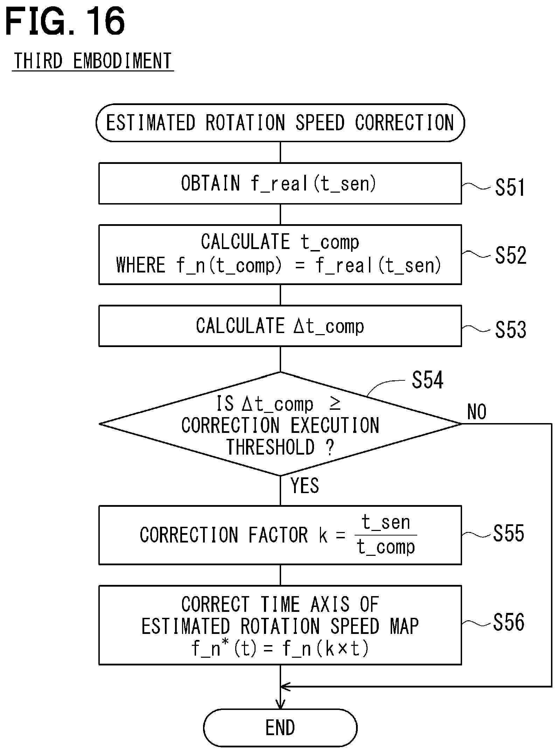

With reference to FIGS. 16 to 18, time axis correction of the estimated rotational speed map according to a third embodiment will be described. In the first embodiment, the prediction unit 72 always uses the pre-stored estimated rotational speed map to predict the future engagement timing Eng_f based on the most recent past engagement timing Eng_p. However, due to discrepancies between the estimated rotational speed in the pre-stored map and the actual rotational speed, there is a possibility that an error may occur in the future engagement timing Eng_f predicted using the map. Therefore, in the third embodiment, the estimated rotational speed map is corrected based on the actual rotational speed.

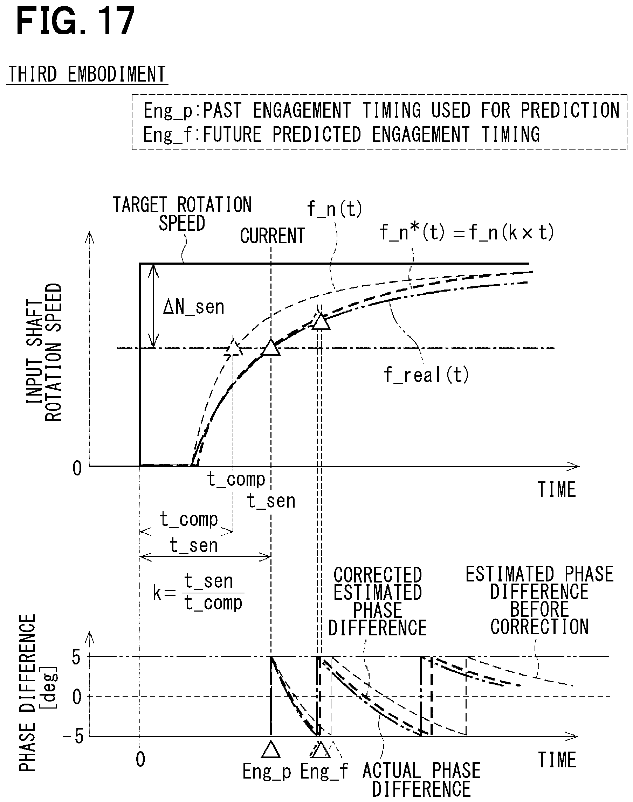

The flowchart in FIG. 16 shows the details of step S5 "Correction of Estimated Rotational Speed," which is executed when the determination in S4 of the main flowchart in FIG. 8 is YES. In FIG. 17, a two-dot chain line indicates the actual rotational speed f_real(t), a thin dashed line indicates the estimated rotational speed f_n(t) before correction, and a thick dashed line indicates the estimated rotational speed f_n*(t) after correction. A time span from the engagement instruction to the previous engagement timing Eng_p, which is used for prediction, is referred to as an engagement timing occurrence time t_sen.

After the previous engagement timing has been acquired, in S51, the actual rotational speed f_real(t_sen) at the engagement timing occurrence time t_sen is obtained. In S52, in the map of the estimated rotational speed f_n(t) before correction, the corresponding time t_comp at which "f_n(t_comp) = f_real(t_sen)" is calculated. In FIG. 17, by moving a point of f_real(t_sen) horizontally, a time value at the intersection with the map of the estimated rotational speed f_n(t) is the corresponding time t_comp.

In S53, a time difference Δt_comp between the corresponding time t_comp and the engagement timing occurrence time t_sen is calculated. In S54, it is determined whether the time difference Δt_comp is greater than or equal to the correction execution threshold; when NO, the correction is not performed and the process ends. When YES in S54, then in S55, a ratio of the engagement timing occurrence time t_sen to the corresponding time t_comp is calculated as a correction factor k. In S56, the time axis of the estimated rotational speed map is corrected by a factor of k. In other words, a relationship between the estimated rotational speeds before and after the correction, f_n(t) and f_n*(t), is given by "f_n*(t) = f_n(k × t)", indicating that the time axis is corrected by the factor of k.

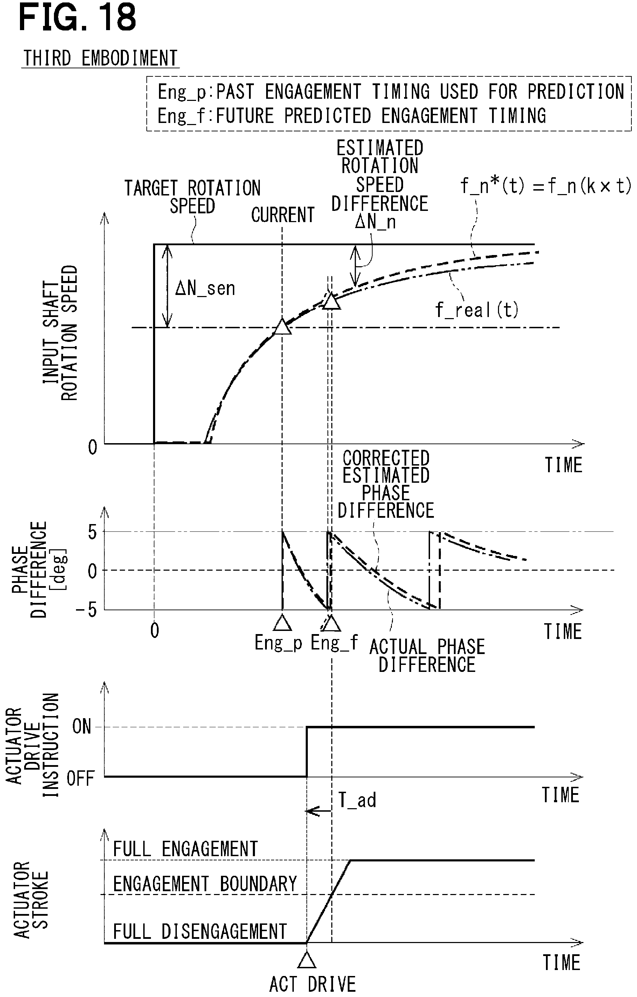

As shown in FIG. 18, the corrected estimated rotational speed f_n*(t) closely matches the actual rotational speed f_real(t). In this way, the controller 7 stores the estimated rotational speed map that defines the change in estimated rotational speed with respect to the drive time of the input shaft during the synchronization operation. In addition, the controller 7 acquires the actual rotational speed f_real(t_sen) of the input shaft 3 at the engagement timing of the previous synchronization operation. The controller 7 corrects the time axis of the estimated rotational speed map by multiplying it by the correction factor k, so that the estimated rotational speed f_n(t_comp) matches the actual rotational speed f_real(t_sen). In this way, the controller 7 calculates the corrected estimated rotational speed f_n*(t) and uses it for predicting future engagement timings.

In the third embodiment, by using the estimated rotational speed map in which the time axis has been corrected according to the actual behavior, the prediction and estimation of future engagement timings can be improved. On the other hand, if the rotational speed axis (vertical axis) of the estimated rotational speed map is corrected instead of the time axis (horizontal axis), the convergence characteristics of the rotational speed difference with respect to the target rotational speed change. Consequently, the effect of reducing the future estimation error, which becomes smaller as the rotational speed difference decreases, is also reduced. In contrast, in the third embodiment, since the time axis of the estimated rotational speed map is corrected, the convergence characteristics of the rotational speed difference are maintained. Therefore, the effect of reducing the future estimation error can be increased.

### Fourth Embodiment

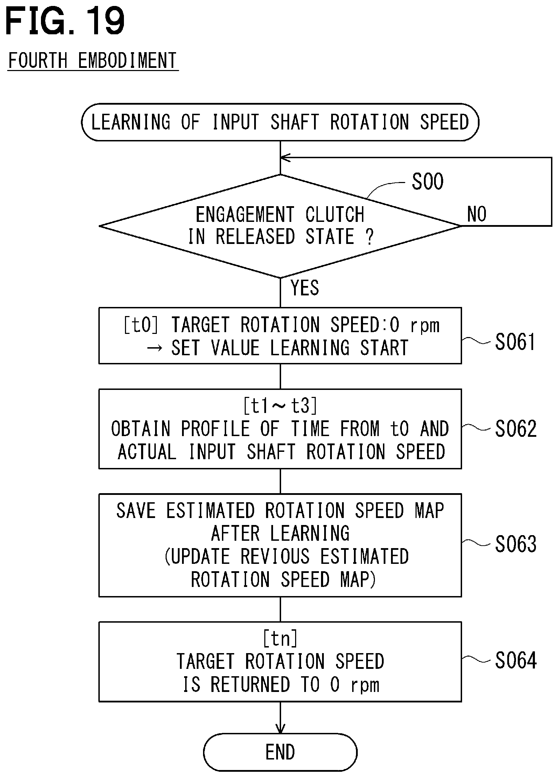

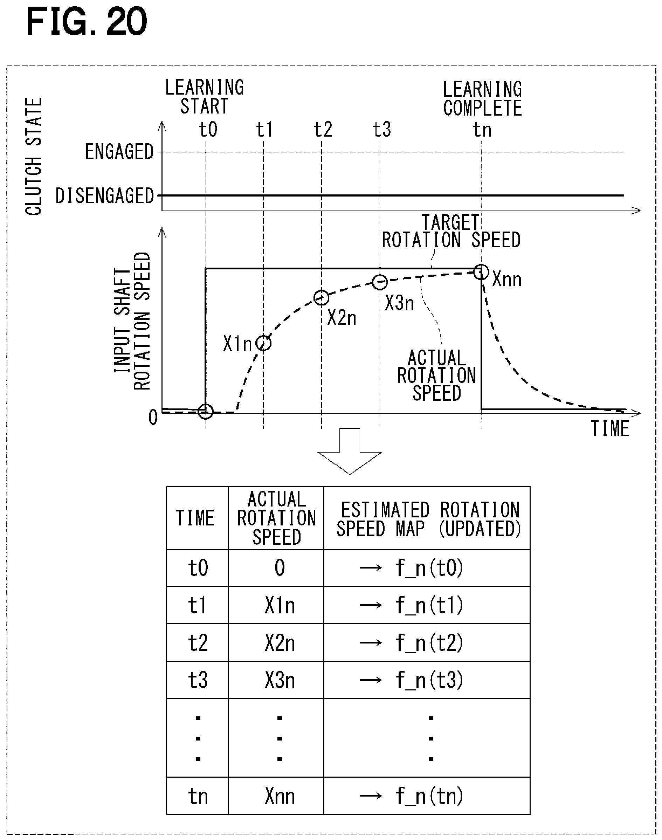

With reference to FIGS. 19 and 20, learning of the actual input shaft rotational speed according to a fourth embodiment will be described. The estimated rotational speed in the pre-stored map under standard conditions may not match the actual input shaft rotational speed due to variations such as individual differences in the motor 82, temperature, power supply voltage, and the like. Therefore, in the fourth embodiment, a relationship between the drive time and the actual rotational speed when increasing the rotational speed of the input shaft relative to the target rotational speed with the dog clutch 10 in the released state is learned, and the estimated rotational speed map is updated based on the learning results.

In step S00 of a flowchart in FIG. 19, it is determined whether the dog clutch 10 is in the released state. When the determination is YES, the process proceeds to S061 and learning is started. The time chart in FIG. 20 shows the changes in the actual input shaft rotational speed (0, X1n to Xnn) from a learning start time point t0 to a learning completion time point tn. Time point t1 to tn indicate both time points and an elapsed time from time point t0.

At time point t0, when the target rotational speed is step-increased from 0 rpm to a set value in S061, the prediction unit 72 starts the learning process. In S062, the prediction unit 72 acquires profile of the elapsed time from time point t0 and the actual input shaft rotational speeds X1n to X3n at time points t1 to t3. In S063, the prediction unit 72 stores the estimated rotational speed map obtained after learning. In other words, the previously estimated rotational speed map is updated. In S064, at time point tn, the target rotational speed is returned to 0 rpm.

In the fourth embodiment, variations in the accuracy of input shaft rotational speed estimation due to factors such as motor temperature and power supply voltage can be compensated through learning, thereby improving the estimation accuracy.

### Fifth Embodiment

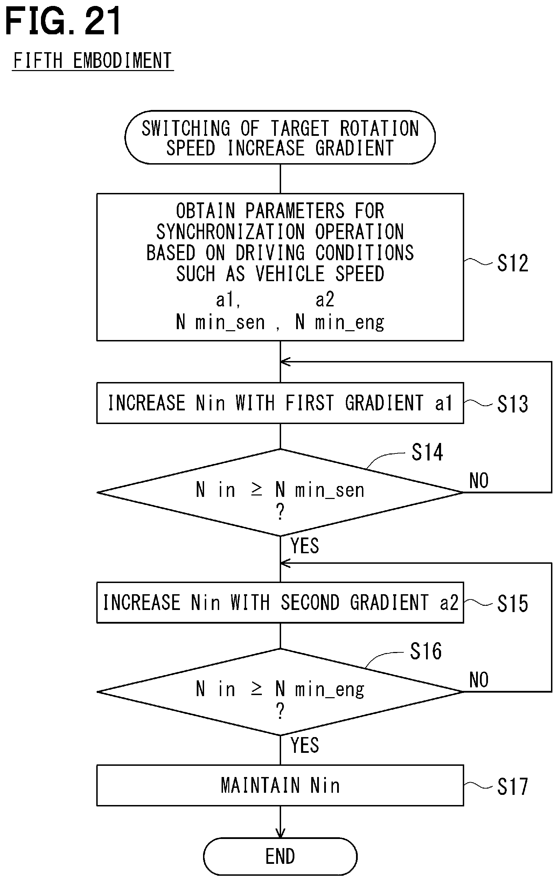

With reference to FIGS. 21 to 28, a switching of an increase gradient of the target rotational speed of the input shaft according to a fifth embodiment will be described. A target rotational speed refers to a target value of the input shaft rotational speed, and a gradient means a rate of change over time. The controller 7 increases the input shaft rotational speed up to the final target rotational speed corresponding to vehicle operating states such as vehicle speed during the synchronization operation. The final target rotational speed in the fifth embodiment is a minimum engageable rotational speed at which the clutch engagement can be performed within a permissible limit of engagement shock, and is determined according to the output shaft rotational speed converted from the vehicle speed.

During the synchronization operation, it is preferable for improving the estimation accuracy to define a linear profile of the target rotational speed according to the elapsed time from the start, and to increase the input shaft rotational speed along this linear profile. However, when a maximum gradient corresponding to the maximum torque of the motor 82 is uniformly applied over the entire period to increase the speed with a single linear profile, a phase difference detection time may become prolonged, and highly responsive clutch engagement may not be achievable. The detailed reason for this will be described later.

In the fifth embodiment, a period of the synchronization operation is divided into multiple periods including a first period and a second period. The controller 7 sets a linear gradient for each period and increases the target rotational speed in accordance with a piecewise linear profile (broken line profile) in which these gradients are connected. The first period is a period from the start of the synchronization operation until the input shaft rotational speed increases to the minimum rotational speed at which the phase difference sensor 6 can detect a phase difference, that is, the minimum detectable rotational speed Nmin_sen (see FIG. 7, etc.). The second period is a period following the first period during which the input shaft rotational speed further increases from the minimum detectable rotational speed Nmin_sen. A second gradient in the second period is set to be smaller than a first gradient in the first period.

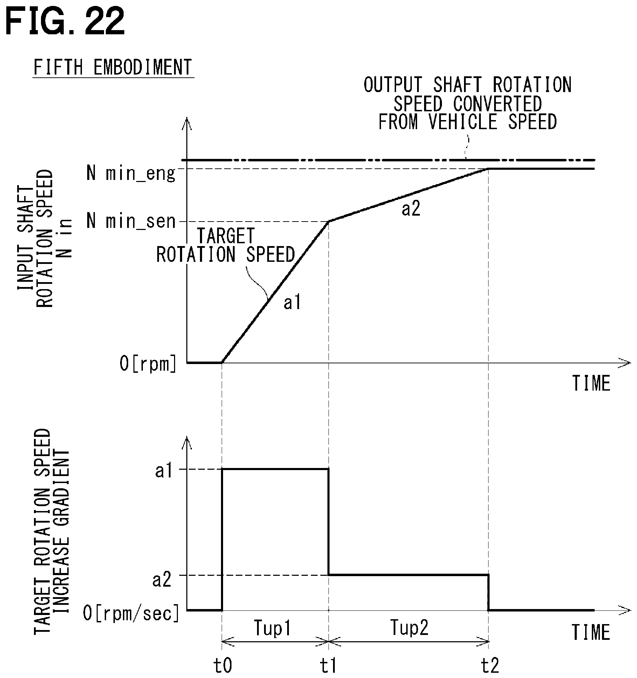

Next, reference is made to FIGS. 21 and 22. A flowchart in FIG. 21 relates to S1 "Start of Synchronization Operation" in the main flowchart of FIG. 8, and includes steps S12 to S17. An upper diagram of FIG. 22 shows a polygonal-line profile of the target rotational speed. This profile is switched according to the vehicle operating conditions such as vehicle speed. The symbols "t1" and "t2" in FIG. 22 are used independently from the figures of other embodiments.

During the first period Tup1, from the start of the synchronization operation at time point t0 to time point t1, the input shaft rotational speed Nin increases from 0 rpm to the minimum detectable rotational speed Nmin_sen at the first gradient a1. During the second period Tup2, from time point t1 to time point t2, the input shaft rotational speed Nin increases from the minimum detectable rotational speed Nmin_sen to the minimum engageable rotational speed Nmin_eng, which is a final target rotational speed, at the second gradient a2. After time point t2, the input shaft rotational speed Nin is maintained at the minimum engageable rotational speed Nmin_eng.

In a bottom diagram of FIG. 22, the first gradient a1 and the second gradient a2 are compared. The values of the first and second gradients are expressed in units of [rpm/sec], that is, as the rate of change of rotational speed over time. The first gradient a1 and the second gradient a2 are positive values, and the second gradient a2 is smaller than the first gradient a1 (0 < a2 < a1). The first gradient a1 corresponds to the maximum torque of the motor 82.

The main entity executing the processes in the flowchart is the controller 7. In step S12, the controller 7 acquires, as parameters for the synchronization operation, the first gradient a1, the second gradient a2, the minimum detectable rotational speed Nmin_sen, and the minimum engageable rotational speed Nmin_eng, according to the driving conditions such as vehicle speed. In step S13, after the start of the synchronization operation, the controller 7 increases the input shaft rotational speed Nin at the first gradient a1. In step S14, it is determined whether the input shaft rotational speed Nin is equal to or greater than the minimum detectable rotational speed Nmin_sen. Step S13 is repeated until a YES determination is made in step S14.

In step S15, the controller 7 increases the input shaft rotational speed Nin at the second gradient a2 during the second period Tup2. In step S16, it is determined whether the input shaft rotational speed Nin is the minimum engageable rotational speed Nmin_eng. Step S15 is repeated until a YES determination is made in step S16. After a YES determination is made in step S16, in step S17, the controller 7 holds the input shaft rotational speed Nin at a gradient of 0.

In this manner, during the first period Tup1, the input shaft rotational speed Nin is increased toward synchronization at the fastest rate. In the second period Tup2, during which phase difference detection by the phase difference sensor 6 becomes possible, the second gradient a2 is set so that the phase difference detection time is minimized. Therefore, in the fifth embodiment, the total engagement time is shortened by reducing both the synchronization time and the phase difference detection time. In addition, the target rotational speed profile is set so as to achieve highly responsive clutch engagement in accordance with the vehicle operating conditions, such as vehicle speed.

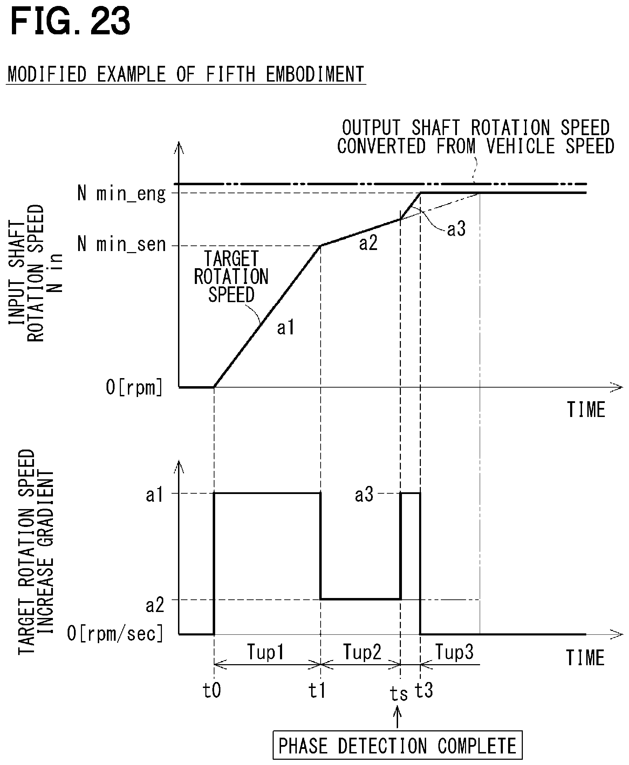

FIG. 23 shows a timing chart of the synchronization operation according to a modification of the fifth embodiment. The first gradient a1 in the first period Tup1 and the second gradient a2 at the beginning of the second period Tup2 are the same as those in the basic example shown in FIG. 22. In the modification, when the prediction of the future engagement timing is completed at a time point ts during the second period Tup2, the second period Tup2 ends and transitions to a third period Tup3. In the third period Tup3, the gradient is switched to a third gradient a3, which is greater than the second gradient a2, and the input shaft rotational speed Nin increases to the minimum engageable rotational speed Nmin_eng. For example, the third gradient a3 is set to be equivalent to the first gradient a1. After completion of the phase difference detection, the synchronization time until the minimum engageable rotational speed Nmin_eng is reached is shortened, thereby further reducing the total engagement time.

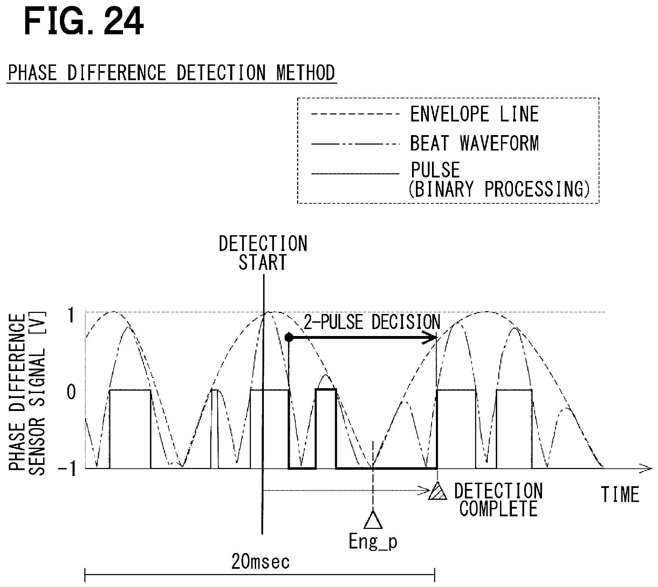

The reason the phase difference detection time becomes longer when the rate of increase (gradient) of the input shaft rotational speed during the phase difference detection is large will be explained with reference to FIGS. 24 to 28. In FIGS. 24 to 28, the phase difference sensor signal on a vertical axis represents the output voltage of the phase difference sensor 6, and it is offset such that the output voltage becomes 0 [V] when the phase difference Δθ = 0 (see FIG. 6). The time axis is indicated with reference to a scale of 20 [msec]. When the phase difference Δθ between the first clutch member 11 and the second clutch member 12, each having 36 teeth, is ±5 degrees (see FIG. 6), the output voltage of the phase difference sensor 6 is ±1 [V]. A two-dot chain line in FIGS. 24 to 28 indicates the sensor output of a beat waveform with a frequency corresponding to the rotational speed difference, and a dashed line indicates an envelope of the beat waveform. A solid-line pulse waveform is obtained by binarizing the sensor output such that the output is set to 0 [V] when the sensor output is between 0 [V] and +1 [V] (inclusive), and to (-1) [V] when the sensor output is between -1 [V] (inclusive) and less than 0 V.

With reference to FIG. 24, a method for detecting the phase difference will be explained. A detection start indicates that the phase difference detection begins at a time point when the input shaft rotational speed Nin reaches the minimum detectable rotational speed Nmin_sen, that is, at time point t1 in FIGS. 22 and 23. Here, the phase difference detection refers to detecting a node of the envelope, that is, detecting a point at which the envelope crosses the output voltage of (-1) [V]. This point becomes the previous engagement timing Eng_p used for prediction. After the start of the detection, two consecutive pulses rising from 0 [V] toward (-1) [V] are detected. The first pulse is detected just before the node of the envelope, and the second pulse is detected straddling the node of the envelope (envelope segment). The phase difference detection is completed at an edge timing where the second pulse falls to 0 [V].

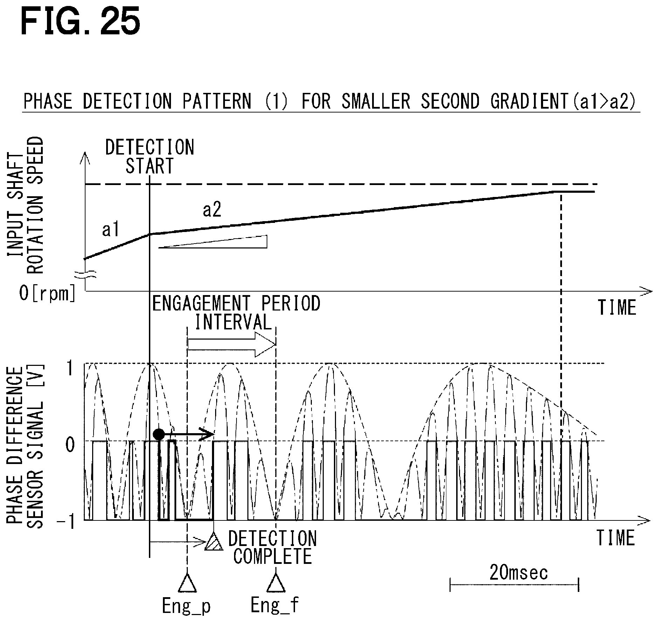

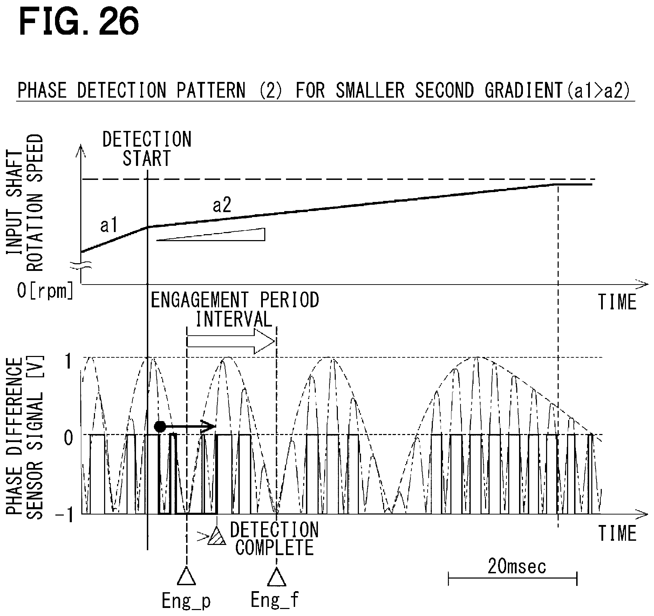

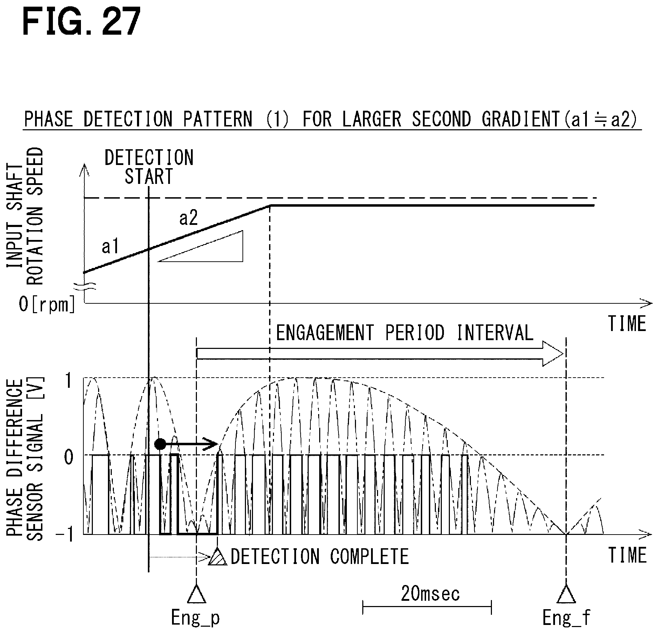

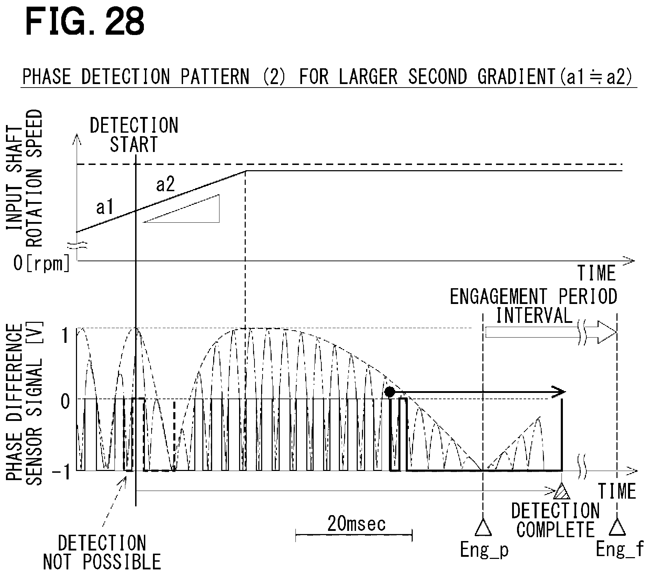

Upper diagrams of FIG. 25 to 28 show the profile of the target rotational speed of the input shaft. The first gradient a1 is the rate of increase in rotational speed up to the start of the phase difference detection, and is common to all four figures. The second gradient a2 is the rate of increase in rotational speed during the phase difference detection. FIGS. 25 and 26 show two patterns of the phase difference detection in a case where the second gradient a2 is smaller than the first gradient a1 (a1 > a2). FIGS. 27 and 28 show two patterns of the phase difference detection in a case where the second gradient a2 is approximately equal to the first gradient a1 (a1 ≈ a2) and both are relatively large. In each of the two patterns, the timing of the pulses that appear after the start of detection up to the first envelope segment differs.

In FIGS. 25 to 28, an interval from the previous engagement timing Eng_p, which is used for prediction, to the future engagement timing Eng_f is referred to as an engagement timing interval. As shown in FIGS. 25 and 26, when the second gradient a2 is smaller than the first gradient a1, the rotational speed difference at the time of the phase difference detection is relatively large, so the engagement timing interval is short. Therefore, the engagement operation at the future engagement timing Eng_f is completed more quickly.

In both FIGS. 25 and 26, the first pulse is detected after the start of detection and before the first envelope segment. In pattern (1) of FIG. 25, after the engagement timing Eng_p, the first pulse falling edge is detected, and the phase difference detection is successfully completed. In pattern (2) of FIG. 26, after the engagement timing Eng_p, a pulse width of the first pulse is smaller than the resolution, so the falling edge cannot be detected, and the next falling edge is detected instead. Therefore, although the completion of the phase difference detection is slightly delayed compared to pattern (1), the impact is minimal.

As shown in FIGS. 27 and 28, when the second gradient a2 is relatively large and comparable to the first gradient a1, the difference in rotational speed at the time of the phase difference detection is small, resulting in a longer engagement timing interval. Therefore, it takes more time until the engagement operation at the future engagement timing Eng_f. In pattern (1) of FIG. 27, the first pulse is detected before the first envelope segment after the start of detection, and the phase difference detection is completed smoothly. However, since the engagement operation time is long, highly responsive clutch engagement cannot be achieved.

In addition, in pattern (2) of FIG. 28, no pulse is generated before the first envelope segment after the start of detection, making detection impossible as indicated by the dashed line, and the first pulse is detected for the first time just before the second envelope segment after the start of detection. Therefore, compared to pattern (1) in FIG. 27, the completion of the phase difference detection is significantly delayed. Furthermore, since it takes longer to reach the engagement operation, the future engagement timing Eng_f will be much further ahead. Therefore, the responsiveness of the clutch engagement following the engagement command is further reduced.

As described above, when the second gradient a2 during the phase difference detection is relatively large, the engagement timing interval becomes longer, and depending on the timing of the pulse immediately after the start of detection, there is a risk that the phase difference detection time may become even longer. Therefore, in the fifth embodiment, by switching the rise gradient of the target rotational speed in stages and setting the second gradient a2 during the phase difference detection to be smaller than the first gradient a1, it is possible to shorten the engagement timing interval and the phase difference detection time.

### Sixth Embodiment

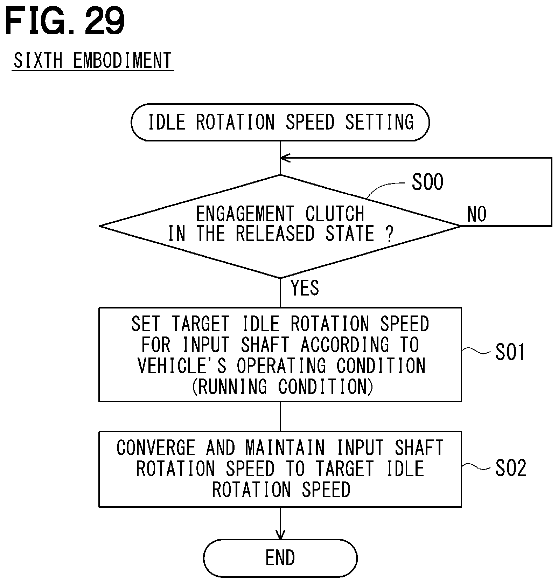

With reference to FIGS. 29 to 32, an idle speed setting according to a sixth embodiment will be described. In the synchronization operation of the above embodiment, the input shaft 3 is stopped in the released state, and after the controller 7 receives the engagement command, the input shaft rotational speed increases from 0 rpm toward the target rotational speed corresponding to the output shaft rotational speed. Here, for convenience, a difference between the minimum engageable rotational speed and the output shaft rotational speed is disregarded. During high-speed driving, the difference between the input shaft rotational speed and the target rotational speed is large, so it takes time for the input shaft rotational speed to reach the target rotational speed and for the clutch engagement to be completed. Therefore, in the sixth embodiment, by maintaining the input shaft rotational speed at a predetermined idle speed in the released state, a time span from the engagement command to the input shaft rotational speed reaching the target rotational speed is shortened.

The controller 7 maintains the input shaft rotational speed at a predetermined idle speed greater than 0 and equal to or less than the output shaft rotational speed while the dog clutch 10 is in the released state before the start of the synchronization operation. This approach is also effective not only during the high-speed driving but in any situation where it is desirable to shorten the time until clutch engagement, for example, when it is necessary to quickly switch from 2WD to 4WD. However, as a trade-off, continuing idle rotation in the released state leads to deteriorated power efficiency, therefore, it is not desirable to set the idle rotational speed higher than necessary. Therefore, it is necessary to set an appropriate target idle rotational speed according to the operating (or driving) condition of the vehicle.

The motor controller 74 acquires the state of the dog clutch 10, for example, from the actuator drive unit 73. The motor controller 74 also acquires information indicating the driving state of the vehicle, such as vehicle speed, navigation information, camera information, and weather information, either directly from external sources or via other blocks.

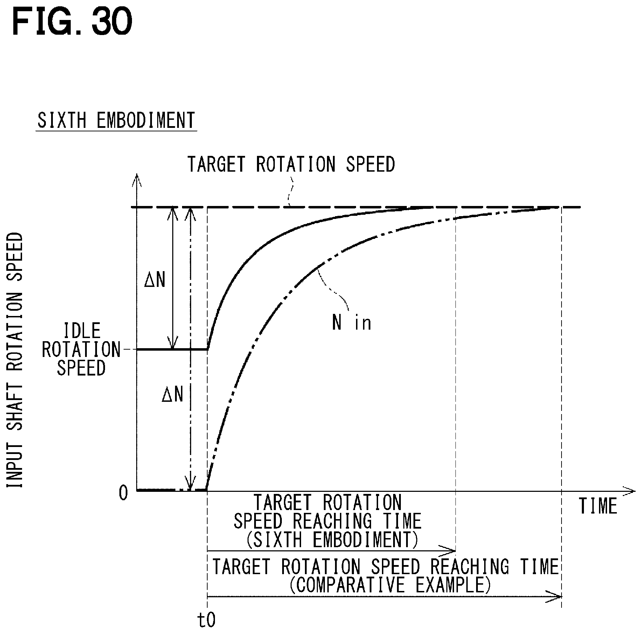

In step S00 of the flowchart in FIG. 29, it is determined whether the dog clutch 10 is in the released state, when YES, the process proceeds to S01. In step S01, the target idle rotational speed of the input shaft is set according to the operating (or driving) condition of the vehicle. In step S02, the motor controller 74 converges and maintains the input shaft rotational speed at the target idle rotational speed. FIG. 30 shows the synchronization operation according to the sixth embodiment. Compared to a comparative example in which the idle rotational speed is not set, in the sixth embodiment where the idle rotational speed is set, the rotational speed difference ΔN between the input shaft rotational speed Nin and the target rotational speed at the start of the synchronization operation is reduced, resulting in a shorter time span to reach the target rotational speed.

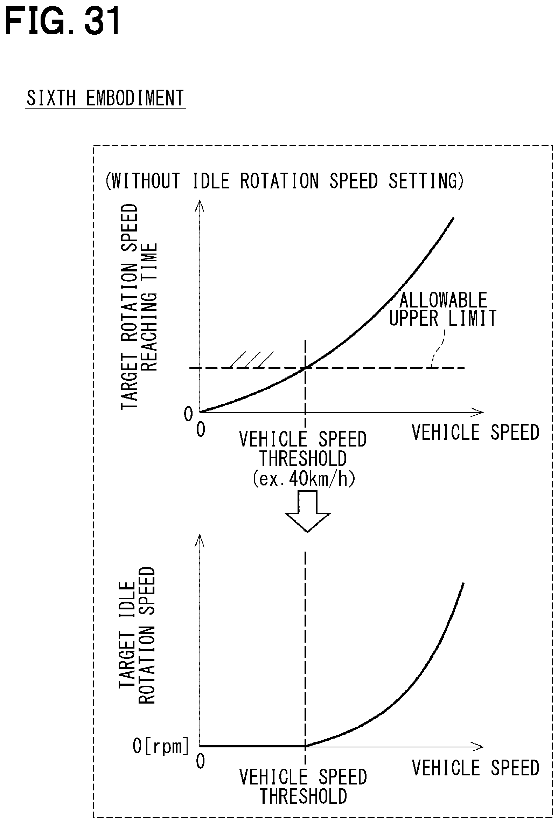

With reference to FIG. 31, a setting example of the target idle rotational speed based on the vehicle speed will be explained. The controller 7 switches the idle rotational speed in accordance with the vehicle speed. As shown in the above figure, when the idle rotational speed is not set, the higher the vehicle speed, the longer the time required to reach the target rotational speed. When the vehicle speed corresponding to an allowable upper limit of the target rotational speed reaching time (for example, 40 km/h) is set as a vehicle speed threshold, then as shown in the figure below, on the lower speed side of the vehicle speed threshold, the target idle rotational speed is set to 0 rpm, while on the higher speed side of the vehicle speed threshold, the target idle rotational speed is set higher as the vehicle speed increases. As a result, the time required to reach the target rotational speed on the higher-speed side of the vehicle speed threshold is shortened.

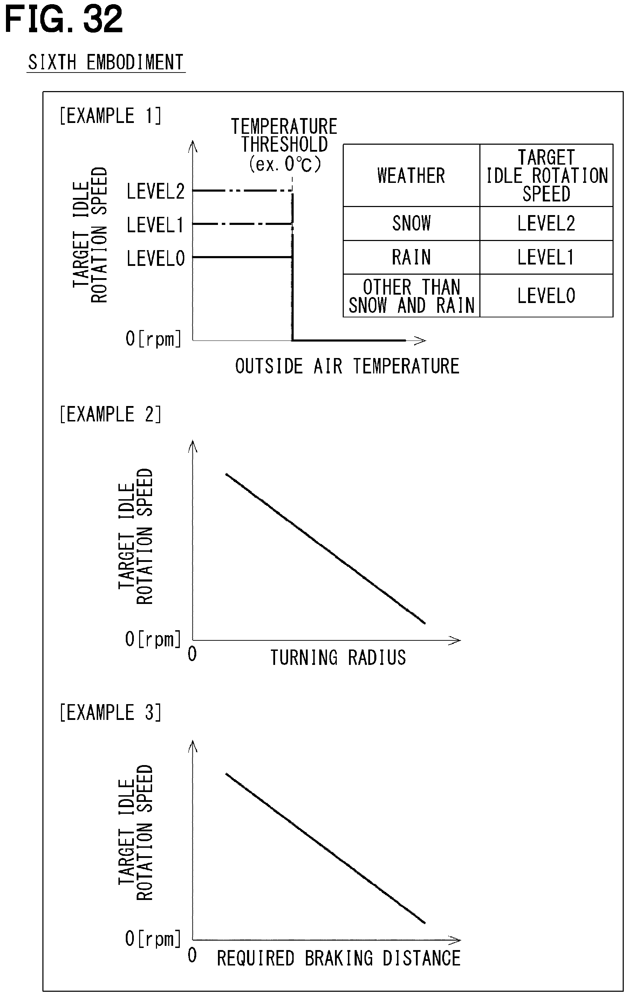

With reference to FIG. 32, a setting example of the target idle rotational speed based on operating conditions other than vehicle speed will be described. Here, application to a 4WD vehicle with front-rear drive force distribution control is assumed. Since the drive force distribution does not function in the clutch disengaged state, it is necessary to engage the clutch with high responsiveness from the disengaged state and enable the drive force distribution in situations where drive force distribution is required.

Example 1 is when it is raining, snowing, or the road surface is frozen. The target idle rotational speed is set to 0 rpm when an outside air temperature is equal to or above a temperature threshold (for example, 0°C), and is set to a level according to the weather when the outside air temperature is below the temperature threshold. For example, in weather conditions other than snow or rain, the level is set to 0; in a case of rain, to level 1; and in a case of snow, to level 2. The higher the level, the higher the target idle rotational speed is set.

Example 2 is during sharp cornering. In a four-wheel independently driven vehicle, where the left and right wheels as well as the front and rear wheels are independently driven, it is possible to distribute the driving force between the inner wheels and the outer wheels during turning. The motor controller 74 acquires a turning radius of a curve to be driven, for example, from navigation information. Since the need for driving force distribution increases as the turning radius becomes smaller (i.e., in sharper curves), the target idle rotational speed is set higher. The target idle rotational speed may also be switched based on result information during turning, such as the vehicle yaw rate.

Example 3 concerns braking at a red traffic light ahead or at an end of a traffic jam. The motor controller 74 acquires a distance to a stop line of a red traffic light ahead or to the end of a traffic jam, that is, a required braking distance, for example, from an onboard camera. As the required braking distance decreases, the necessity for braking in 4WD increases, so the target idle rotational speed is set higher. The target idle rotational speed may also be switched based on result information during braking, such as the deceleration (negative acceleration). In graphs of Example 2 and Example 3, the target idle rotational speed changes continuously with respect to parameters such as turning radius or required braking distance, but the target idle rotational speed may also be configured to change stepwise with respect to these parameters.

In the sixth embodiment, by idling the input shaft with the dog clutch 10 in the released state, it is possible to prevent the clutch engagement time from becoming prolonged according to the vehicle running conditions such as vehicle speed. Alternatively, the clutch engagement time can be further shortened. For example, when setting the idle rotational speed according to vehicle speed, reducing the difference in rotational speed between the input and output shafts in the released state as the vehicle speed increases can reduce the prolongation of the synchronization operation time.

### Seventh Embodiment

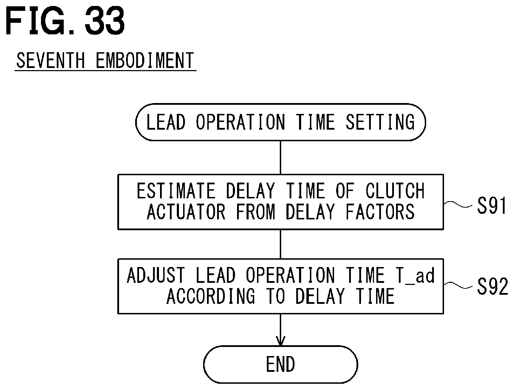

With reference to FIGS. 33 to 35, a setting of an advance operation time according to a seventh embodiment will be described. After the prediction unit 72 starts predicting the engagement timing, the actuator drive unit 73 issues a drive instruction, and based on this instruction, the clutch actuator 5 completes the engagement. During a period from the start of engagement timing prediction by the prediction unit 72 to the completion of engagement by the clutch actuator 5, variations in time occur due to multiple delay factors These delay factors include, for example, signal transmission delays and mechanical response delays. When the degree of time variation is large, the controller 7 may not be able to engage the clutch actuator 5 at the predicted future engagement timing. Therefore, in the seventh embodiment, the controller 7 estimates the operation delay time of the clutch actuator 5 by using information on the delay factors related to the drive of the clutch actuator 5. This estimation includes a process for detecting the delay factors. Based on the estimated operation delay time, the controller 7 starts driving the clutch actuator 5 earlier by an amount of the delay time than the predicted future engagement timing. In other words, the controller 7 sets the adjusted advance operation time T_ad and starts driving the clutch actuator 5 earlier by that time. The process for setting the advance operation time T_ad may be executed by either the prediction unit 72 or the actuator drive unit 73.

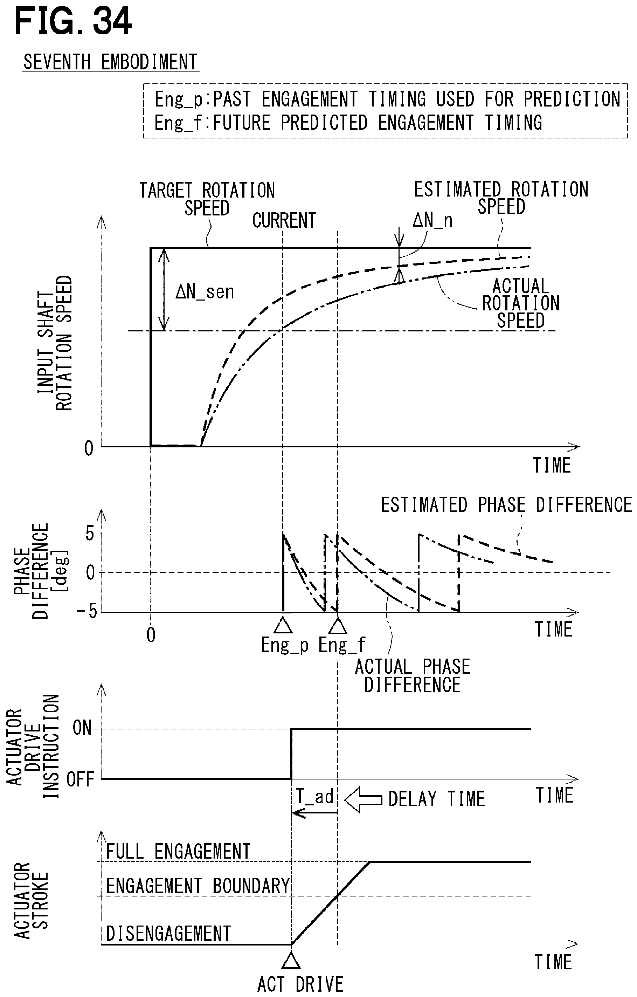

In step S91 of the flowchart in FIG. 33, the prediction unit 72 estimates the delay time of the clutch actuator 5 based on the delay factors. In step S92, the prediction unit 72 adjusts the advance operation time point t_ad according to the estimated delay time. In third and bottom diagrams of FIG. 34, compared to FIG. 11, the advance operation time point t_ad is longer and the actuator drive timing is indicated earlier.

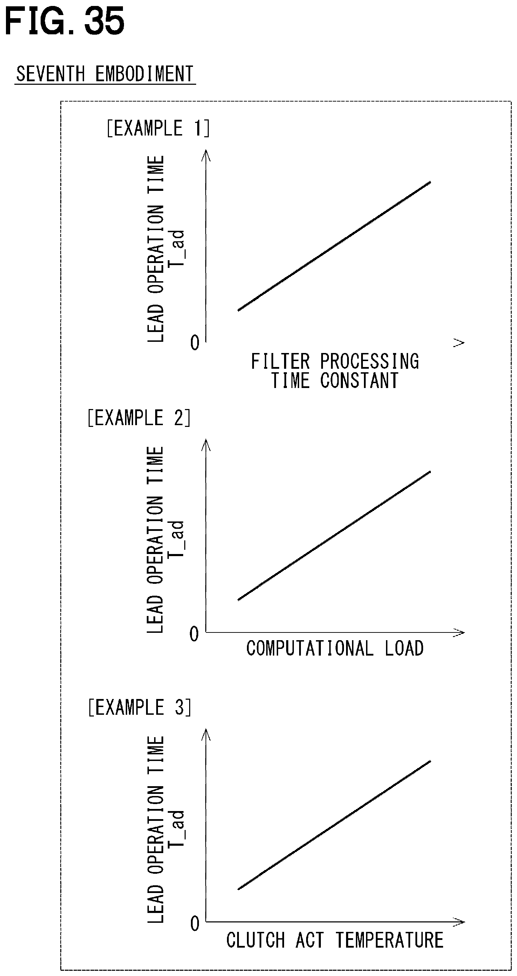

Referring to FIG. 35, a setting example of the advance operation time based on the delay factors will be described. Example 1 of the delay factors is a time constant of a filter processing in the filter unit 71, which filters the output signal of the phase difference sensor 6. The larger the time constant of the filter processing, the greater the delay in the phase difference sensor signal acquired by the prediction unit 72 relative to the true phase difference, so the advance operation time point t_ad is set longer.

Example 2 of the delay factors is computational load on the CPU that constitutes the controller 7. The greater the computational load on the CPU, the longer the delay time from the drive instruction to the clutch actuator 5 to the actual completion of the drive due to processing delays or communication delays between CPUs via CAN or the like. Therefore, the advance operation time point t_ad is set longer.

Example 3 of the delay factors is a temperature of the clutch actuator 5. For example, when the clutch actuator 5 is constituted by a permanent magnet synchronous motor, torque corresponding to an electric current passing through changes depending on an actuator temperature. At high temperatures, demagnetization causes the torque to decrease, while at low temperatures, magnetization increases the torque, resulting in a change in the operating speed of the clutch actuator 5. The higher the actuator temperature, the slower the operating speed and the longer the time required for engagement completion; therefore, the advance operation time point t_ad is set longer.

In the seventh embodiment, by adjusting the advance operation time point t_ad to reduce time fluctuations caused by the delay factors related to driving the clutch actuator 5 and predicting the engagement timing, it is possible to engage the clutch at the predicted future engagement timing.

### Eighth Embodiment

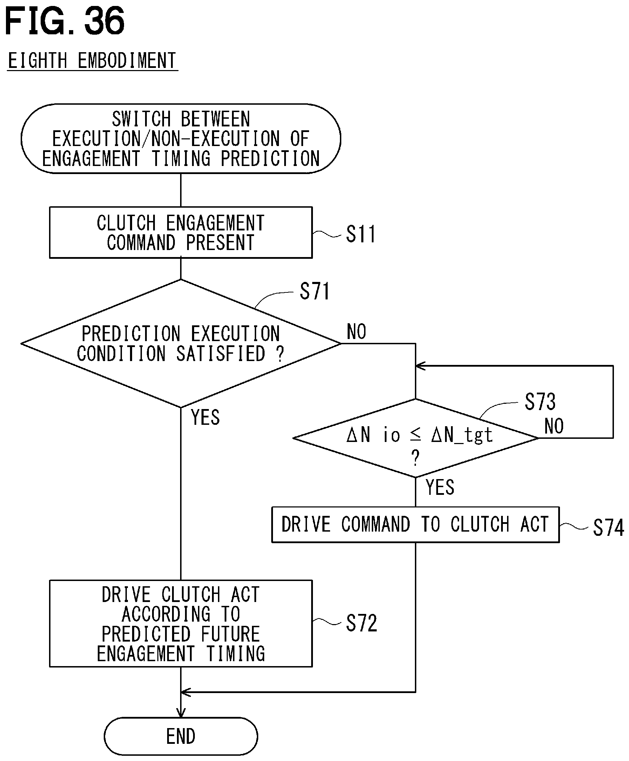

With reference to FIGS. 36 to 40, switching between execution and non-execution of engagement timing prediction according to an eighth embodiment will be described. Executing future engagement timing prediction for highly responsive clutch engagement is not always optimal, in some situations, performing such prediction may actually hinder high responsiveness. Therefore, in the eighth embodiment, when it is determined that the prediction execution conditions are satisfied according to the driving state of the vehicle, the controller 7 executes the prediction of the future engagement timing and drives the clutch actuator 5. It may be considered that the above first to seventh embodiments execute each process on a premise that the prediction execution conditions have been satisfied.

Further, when it is determined that the prediction execution conditions are not satisfied according to the driving state of the vehicle, the controller 7 does not execute the prediction of the future engagement timing. In that case, the controller 7 drives the clutch actuator 5 based on the rotational speed difference between the input shaft 3 and the output shaft 4. More specifically, when the rotational speed difference ΔNio between the input shaft 3 and the output shaft 4 becomes equal to or less than the target rotational speed difference ΔN_tgt, and synchronization of rotation between the input shaft 3 and the output shaft 4 has been achieved, the actuator drive unit 73 outputs a drive command to the clutch actuator 5, using this synchronization as a trigger.

Here, "not executing the prediction of the future engagement timing" is not limited to the meaning of canceling the entire series of processes in which, after the engagement command, the engagement timing of the previous cycle is acquired based on the phase difference sensor signal and the future engagement timing is predicted from the estimated rotational speed. For example, it is also acceptable for the prediction unit 72 to always perform the calculation up to the point of predicting the future engagement timing, and then switch whether the prediction unit 72 outputs a drive command to the actuator drive unit 73 with reference to the future engagement timing. In this way, switching between "reference/non-reference of the future engagement timing" is also interpreted as one embodiment of "execution/non-execution of engagement timing prediction."

In step S11 of the flowchart in FIG. 36, the clutch engagement command is input. In step S71, it is determined whether the prediction execution condition is satisfied. When the result in step S71 is YES, then in step S72, the controller 7 executes the prediction of the future engagement timing and drives the clutch actuator 5 in accordance with the predicted future engagement timing. When the result in step S71 is NO, then in step S73, it is determined whether the current input-output shaft rotational speed difference ΔNio is equal to or less than the target rotational speed difference ΔN_tgt. At the timing when the result in step S73 is determined to be YES, the process advances to step S74, where the actuator drive unit 73 outputs the drive command to the clutch actuator 5.

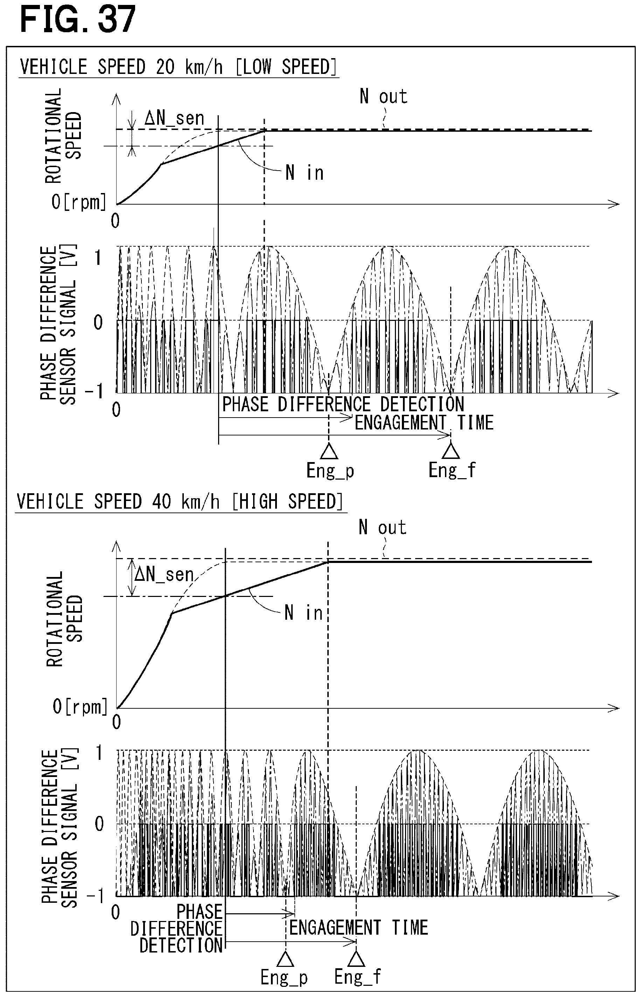

For example, when the vehicle speed is lower than a predetermined threshold, it is determined that the prediction execution condition is not satisfied. As shown in FIG. 37, a case where the vehicle speed is 20 [km/h] as an example of "low speed" and a case where the vehicle speed is [40 km/h] as an example of "high speed" are compared. Assuming that the input-output shaft rotational speed difference is the same, the beat waveform, that is, the waveform of the envelope, will be identical. Since the frequency of the phase difference sensor signal is proportional to the vehicle speed, the width of the binarized pulses becomes shorter at higher speeds and longer at lower speeds. The number of pulses appearing between nodes of the beat waveform increases at higher speeds and decreases at lower speeds.

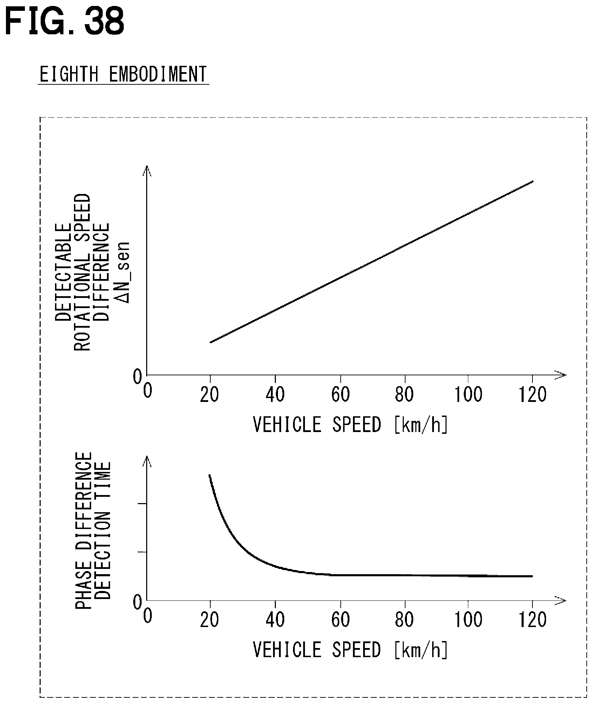

Therefore, in order to prevent erroneous detection when detecting nodes of the beat waveform, it is necessary to set the detectable rotational speed difference ΔN_sen smaller at lower speeds, which results in higher detectable minimum rotational speed Nmin_sen. As a result, when the input shaft rotational speed increases, the phase difference detection time and the engagement time become longer at lower speeds. A relationship between vehicle speed, the detectable rotational speed difference ΔN_sen, and the phase difference detection time is shown in FIG. 38.

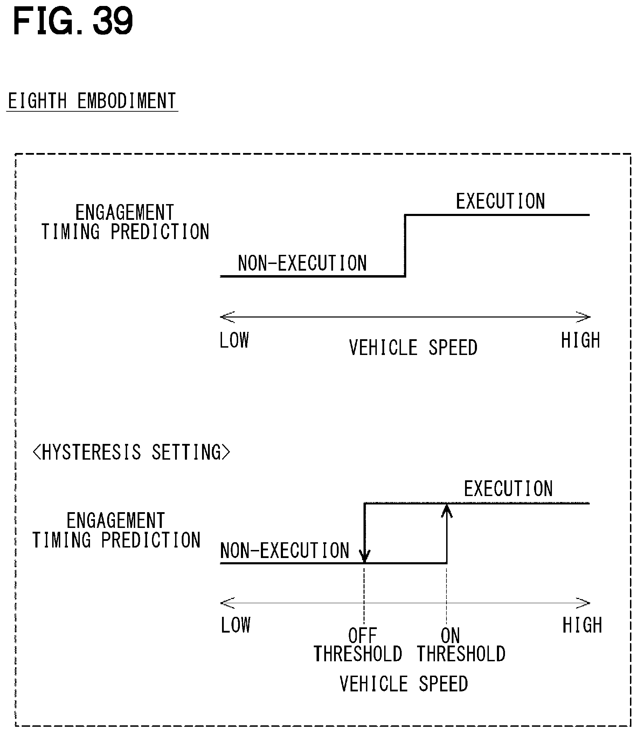

Therefore, as shown in FIG. 39, the controller 7 executes the prediction of the future engagement timing when the vehicle speed is equal to or higher than the vehicle speed threshold, and does not execute it when the vehicle speed is lower than the vehicle speed threshold. When the vehicle speed is lower than the vehicle speed threshold, and when it is detected that the input shaft and the output shaft of the transmission have achieved rotational synchronization, the controller 7 outputs a drive instruction to the clutch actuator 5. As a result, when the vehicle speed is lower than the vehicle speed threshold, it is possible to engage the clutch earlier without waiting for the next clutch engagement timing. Furthermore, hysteresis can be provided to the vehicle speed threshold. Specifically, an ON threshold for switching from the non-execution state to the execution state may be set to a higher vehicle speed than an OFF threshold for switching from the execution state to the non-execution state. This makes it possible to prevent hunting of the control by the controller 7 due to fluctuations in vehicle speed near the vehicle speed threshold.

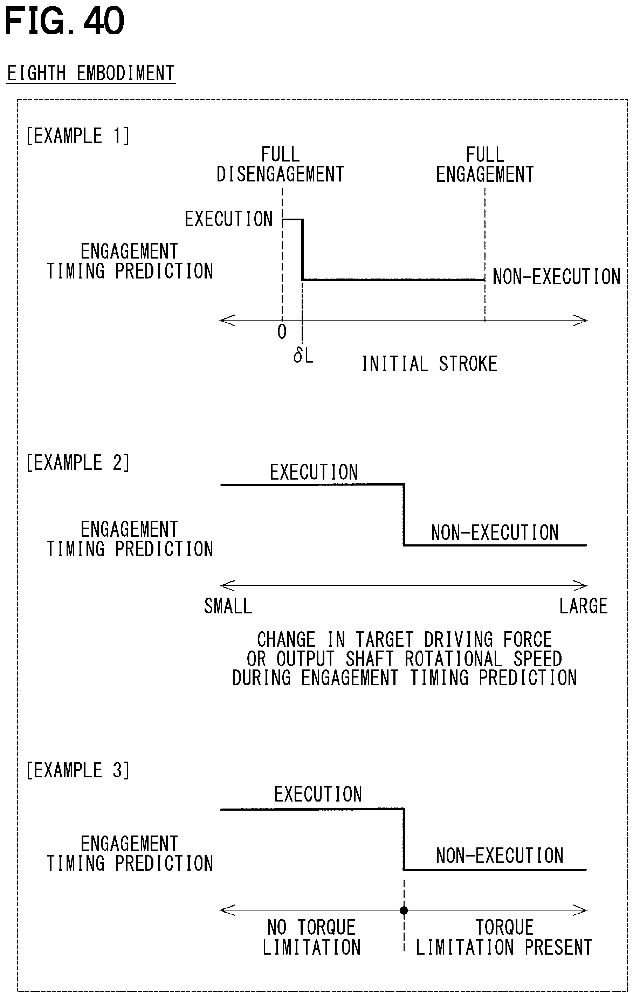

With reference to FIG. 40, an example will be described in which the execution or non-execution of the clutch engagement timing prediction is switched based on other parameters. As Example 1 of such a parameter, the initial stroke of the clutch actuator 5 can be used. For example, when the clutch actuator 5 is intentionally moved from the fully released position, the initial stroke at the time of the clutch engagement instruction becomes larger than the normal value (i.e., zero). When the clutch engagement operation is performed from a position other than the normal initial position (i.e., an abnormal position) of the clutch actuator 5, an error occurs in the actuator stroke up to the engagement boundary position and the fully engaged position. As a result, there is a risk that the clutch cannot be accurately engaged at the predicted future clutch engagement timing.

Therefore, the controller 7 executes the process of predicting the future clutch engagement timing when the initial stroke of the clutch actuator 5 at the time of the clutch engagement instruction is within a range from zero to an allowable value δL. On the other hand, when the initial stroke of the clutch actuator 5 exceeds the allowable value δL, the controller 7 does not execute the process of predicting the future clutch engagement timing. Furthermore, when the initial stroke of the clutch actuator 5 exceeds the allowable value δL, and when it is detected that the input shaft and the output shaft of the transmission have achieved the rotational synchronization, the controller 7 outputs the drive instruction to the clutch actuator 5. As a result, it is possible to avoid a situation in which the clutch cannot be engaged at the predicted future clutch engagement timing, and to achieve early clutch engagement.

The parameter in Example 2 is a change in a target driving force or the output shaft rotational speed during the engagement timing prediction. The target driving force refers to the driving force expected of the vehicle based on user operations, such as a pedal operation amount, brake operation, or cruise control operation. The change may be evaluated based on either the amount of change before and after the variation or the rate of change. When the change in the target driving force or the output shaft rotational speed is large, the estimation accuracy of the target rotational speed difference ΔN_tgt deteriorates, resulting in reduced prediction accuracy of the future engagement timing.

Therefore, when the change in the target driving force or the output shaft rotational speed during engagement timing prediction is equal to or less than a threshold value, the controller 7 executes the prediction of the future engagement timing, when the change in the target driving force or the output shaft rotational speed exceeds the threshold value, it does not execute the prediction. When the change in the target driving force or the output shaft rotational speed during engagement timing prediction exceeds the threshold value, and when it is detected that the input shaft and the output shaft of the transmission have achieved the rotational synchronization, the controller 7 outputs the drive instruction to the clutch actuator 5. As a result, deterioration in the prediction accuracy of the future engagement timing can be prevented.

The parameter in Example 3 is the presence or absence of torque limitation of the motor 82 during the engagement instruction or the during engagement timing prediction. For example, when the battery SOC (State of Charge) decreases or when an overheating abnormality occurs in the motor winding, the torque limitation may be applied to the motor 82. If the torque limitation is applied to the motor 82, it becomes difficult to follow the target rotational speed during the synchronization operation. As a result, the accuracy of the estimated rotational speed decreases, and the accuracy of the predicted future clutch engagement timing also decreases.

Therefore, the controller 7 executes the process of predicting the future clutch engagement timing when there is no torque limitation of the motor 82 during the clutch engagement instruction or during the prediction of the clutch engagement timing. On the other hand, when there is the torque limitation of the motor 82, the controller 7 does not execute the process of predicting the future clutch engagement timing. Furthermore, when there is the torque limitation of the motor 82, and when it is detected that the input shaft and the output shaft of the transmission have achieved the rotational synchronization, the controller 7 outputs the drive instruction to the clutch actuator 5. As a result, deterioration in the prediction accuracy of the future engagement timing can be prevented.

In the eighth embodiment, in situations where the reliability of the prediction cannot be ensured, or in situations where the responsiveness is reduced by performing the clutch engagement timing prediction, the clutch engagement timing prediction is not executed, and the clutch actuator is driven based only on the difference between the rotational speed of the input shaft and the output shaft of the transmission. By doing so, it is possible to achieve appropriate operation according to the situation. For example, when the vehicle speed is low, the phase difference detection time becomes long, so it is possible to engage the clutch more quickly by not executing the clutch engagement timing prediction.

### Other Embodiments

The dog clutch shown in FIGS. 1, 5 is configured as a face-type gear in which the clutch member 11 and the clutch member 12 themselves move relative to each other in the axial direction, and the first engagement teeth 13 of the first clutch member 11 and the second engagement teeth 14 of the second clutch member 12 can directly mesh with each other. In addition to this configuration, a sleeve-type clutch may be adopted in which the clutch members are fixed, and a movable sleeve as an intermediate member is provided as a separate component.

A sleeve-type clutch is disclosed, for example, in Japanese Patent Publication No. 2010-96190A. In a sleeve-type clutch, the first engagement teeth of the first clutch member and the second engagement teeth of the second clutch member can mesh with each other via a sleeve serving as an intermediate member. By moving the sleeve in the axial direction relative to the first clutch member and the second clutch member using a clutch actuator, the engaged and disengaged states of the dog clutch are switched. A phase difference sensor is adjusted so that its detection position produces different sensor signals in the engaged state and the disengaged state.

The dog clutch 10 is not limited to the configuration provided between the rear wheel motor 82 and the rear wheels 92 in the vehicle 90 that can switch between 2WD and 4WD as shown in FIG. 1; for example, it may also be provided between a front wheel motor and the front wheels in a front-wheel-drive (FF) vehicle.

The phase difference sensor 6 is not limited to detecting the total area of the engagement teeth 13 and 14 within the detection range SA, as shown in FIGS. 5 and 6. It may be any sensor capable of detecting information correlated with the difference in rotational positions between the input shaft 3 and the output shaft 4, as long as this information can be converted into a phase difference. In the acquisition of the phase difference information based on the phase difference sensor, which is one aspect of the switching of the phase difference information acquisition means according to the second embodiment, the acquisition of information based on various types of phase difference sensors is included.

The rotational drive source connected to the input shaft 3 is not limited to the motor 82. It may also be an internal combustion engine or the like. In the fourth embodiment, instead of the drive time from the start of energization of the motor 82, the relationship between the drive time from the start of operation of an internal combustion engine or the like and the rotational speed of the input shaft may be learned. In addition, the dog clutch engagement control system may be applied not only to a vehicle powertrain but also to power transmission mechanisms of general machinery or the like.

The following provides a supplementary explanation regarding the concept of the target rotational speed difference ΔN_tgt, which suppresses the engagement shock when the vehicle accelerates or decelerates during the synchronization operation in the above embodiment. When the dog clutch 10 is engaged while the actual rotational speed of the input shaft is higher than the target rotational speed, a shock occurs that accelerates the vehicle. When the dog clutch 10 is engaged while the actual rotational speed of the input shaft is lower than the target rotational speed, a shock occurs that decelerates the vehicle.

Therefore, instead of evaluating the rotational speed difference by its absolute value, it may be evaluated by its positive or negative sign. For example, during the vehicle acceleration, a case where the actual rotational speed is greater than a target rotational speed (i.e., actual rotational speed > target rotational speed), which results in acceleration, may be permitted, while a case where the actual rotational speed is less than the target rotational speed, which results in deceleration, may not be permitted. Conversely, during the vehicle deceleration, the opposite may be applied. The target rotational speed difference AN_tgt, corresponding to the permissible limit of the engagement shock, may also be set according to other driving situations and road surface conditions.

In the eighth embodiment, when the prediction execution condition is not satisfied, instead of predicting the future engagement timing based on the most recent past engagement timing, it is also possible to switch to control according to the prior art disclosed in Patent Literature 1, in which an approximation line is calculated based on multiple past engagement timings. Even if the prediction accuracy cannot be ensured using information from only a single past engagement timing, it may be possible to engage the clutch more quickly by using information from multiple past engagement timings.

The present disclosure should not be limited to the embodiment described above. Various other embodiments may be implemented without departing from the scope of the present disclosure.

The following disclosures regarding each of the dog clutch engagement control systems corresponding to the third through eighth embodiments described above may be combined with one another.

A dog clutch engagement control system corresponding to the third embodiment:
"The controller, during a synchronization operation, acquires an actual rotational speed of the input shaft at the most recent past engagement timing, and calculates a corrected estimated rotational speed by multiplying the time axis of the estimated rotational speed map by a correction factor so as to make the estimated rotational speed approach the acquired actual rotational speed."

The dog clutch engagement control system corresponding to the fourth embodiment:
"The controller learns a relationship between a drive time and an actual rotational speed of the input shaft when the rotational speed of the input shaft is increased toward a target rotational speed in the disengaged state of the dog clutch, and updates the estimated rotational speed map based on the learning."

The dog clutch engagement control system corresponding to the fifth embodiment:
"The controller, during execution of the synchronization operation, increases a target rotational speed of the input shaft along a segmented broken-line profile divided into a plurality of periods including a first period and a second period, wherein a second slope in the second period is set to be less than a first slope in the first period."

The dog clutch engagement control system corresponding to the sixth embodiment:
"A dog clutch engagement control system configured to hold the rotational speed of the input shaft at a predetermined idle rotational speed in the disengaged state of the dog clutch."

The dog clutch engagement control system corresponding to the seventh embodiment:
"The controller estimates an operation delay time of the clutch actuator, and starts driving the clutch actuator in advance of the predicted future engagement timing by an advance operation time that is set in accordance with the operation delay time."

The dog clutch engagement control system corresponding to the eighth embodiment:
"When it is determined, in accordance with an operational state of the vehicle, that a predetermined prediction execution condition is satisfied, the controller executes the prediction of the future engagement timing and drives the clutch actuator; and when it is determined, in accordance with an operational state of the vehicle, that the predetermined prediction execution condition is not satisfied, the controller drives the clutch actuator based on a rotational speed difference between the input shaft and the output shaft without executing the prediction of the future engagement timing."

The control apparatus and the technique according to the present disclosure may be achieved by a dedicated computer provided by constituting a processor and a memory programmed to execute one or more functions embodied by a computer program. Alternatively, the control apparatus and the technique according to the present disclosure may be achieved by a dedicated computer provided by constituting a processor with one or more dedicated hardware logic circuits. Alternatively, the control apparatus and the technique according to the present disclosure may be achieved using one or more dedicated computers constituted by a combination of the processor and the memory programmed to execute one or more functions and the processor with one or more hardware logic circuits. Furthermore, the computer program may be stored as instructions executed by a computer on a computer-readable non-transitory tangible recording medium.

The present disclosure has been made in accordance with the embodiments. However, the present disclosure is not limited to such embodiments and configurations. The present disclosure also encompasses various modifications and variations within the scope of equivalents. Furthermore, various combination and formation, and other combination and formation including one, more than one or less than one element may be made in the present disclosure.

## Claims

1. A dog clutch engagement control system comprising:
a dog clutch (10) including: a first clutch member (11) connected to an input shaft and having first engagement teeth (13) arranged in a circumferential direction; and a second clutch member (12) connected to an output shaft and having second engagement teeth (14) arranged in a circumferential direction, the second engagement teeth being engageable with the first engagement teeth directly or via an intermediate member, wherein the first clutch member and the second clutch member are capable of switching between an engaged state and a disengaged state;
a clutch actuator (5) configured to move the first clutch member and the second clutch member in an axial direction relative to each other, or, when the intermediate member is used, to move the intermediate member in the axial direction relative to the first clutch member and the second clutch member;
a phase difference sensor (6) configured to detect a phase difference between the first clutch member and the second clutch member; and
a controller (7) configured to output a drive instruction to the clutch actuator in accordance with an engagement timing at which the dog clutch is engageable, wherein
the controller is configured to, when a predetermined prediction execution condition is satisfied during execution of a synchronization operation in which a rotational speed of the input shaft is increased toward a rotational speed of the output shaft to synchronize rotation of the input shaft and the output shaft in response to an engagement instruction for engaging the dog clutch in the disengaged state:
detect the engagement timing based on an output of the phase difference sensor;
predict a future engagement timing, which is the engagement timing in future, based on a most recent past engagement timing and an estimated rotational speed of the input shaft; and
drive the clutch actuator in accordance with the predicted future engagement timing.

2. A dog clutch engagement control system comprising:
a dog clutch (10) including: a first clutch member (11) connected to an input shaft and having first engagement teeth (13) arranged in a circumferential direction; and a second clutch member (12) connected to an output shaft and having second engagement teeth (14) arranged in a circumferential direction, the second engagement teeth being engageable with the first engagement teeth directly or via an intermediate member, wherein the first clutch member and the second clutch member are capable of switching between an engaged state and a disengaged state;
a clutch actuator (5) configured to move the first clutch member and the second clutch member in an axial direction relative to each other, or, when the intermediate member is used, to move the intermediate member in the axial direction relative to the first clutch member and the second clutch member;
a phase difference sensor (6) configured to detect a phase difference between the first clutch member and the second clutch member; and
a controller (7) configured to output a drive instruction to the clutch actuator in accordance with an engagement timing at which the dog clutch is engageable, wherein
the controller is configured to, when a predetermined prediction execution condition is satisfied during execution of a synchronization operation in which a rotational speed of the input shaft is increased toward a rotational speed of the output shaft to synchronize rotation of the input shaft and the output shaft in response to an engagement instruction for engaging the dog clutch in the disengaged state:
calculate an estimated phase difference between the input shaft and the output shaft based on an initial phase difference between the input shaft and the output shaft at a start of the synchronization operation, and an accumulated phase difference obtained by converting a time integral of the rotational speed difference between the input shaft and the output shaft during execution of the synchronization operation;
switch between detection of the engagement timing based on the output of the phase difference sensor or estimation of the engagement timing based on the estimated phase difference, according to whether detection of the phase difference is possible;
predict the future engagement timing, which is the engagement timing in future, based on a most recent past engagement timing and the estimated rotational speed of the input shaft; and
drive the clutch actuator in accordance with the predicted future engagement timing.

3. The dog clutch engagement control system according to claim 1 or 2, wherein
the controller is configured to:
store an estimated rotational speed map indicating a change in an estimated rotational speed of the input shaft with respect to drive time of the input shaft during the synchronization operation;
acquire an actual rotational speed of the input shaft at the most recent past engagement timing during the synchronization operation; and
calculate a corrected estimated rotational speed by multiplying the drive time of the estimated rotational speed map by a correction factor so as to make the estimated rotational speed approach the acquired actual rotational speed.

4. The dog clutch engagement control system according to claim 1 or 2, wherein
the controller is configured to:
store an estimated rotational speed map indicating a change in an estimated rotational speed of the input shaft with respect to drive time of the input shaft during the synchronization operation;
learn a relationship between the drive time and an actual rotational speed of the input shaft when the rotational speed of the input shaft is increased toward a target rotational speed in the disengaged state of the dog clutch; and
update the estimated rotational speed map based on the learning.

5. The dog clutch engagement control system according to claim 1 or 2, wherein
the controller is configured to increase a target rotational speed, which is a target value of the rotational speed of the input shaft, during execution of the synchronization operation, according to a segmented broken-line profile divided into periods, including: a first period (Tup1) in which the rotational speed of the input shaft increases to a minimum rotational speed at which phase difference detection by the phase difference sensor is possible, and a second period (Tup2), following the first period, in which the rotational speed of the input shaft further increases from the minimum rotational speed,
a first slope (a1) is a rate of change of the target rotational speed in the first period,
a second slope (a2) is a rate of change of the target rotational speed in the second period, and
the second slope is less than the first slope.

6. The dog clutch engagement control system according to claim 5, wherein
the output shaft is connected to a drive wheel (92) of a vehicle (90), and
a segmented broken-line profile of the target rotational speed is selected from among segmented broken-line profiles in accordance with an operational state of the vehicle.

7. The dog clutch engagement control system according to claim 1 or 2, wherein
the controller is configured to hold the rotational speed of the input shaft at a predetermined idle rotational speed, which is greater than zero and not greater than the rotational speed of the output shaft, in the disengaged state of the dog clutch prior to start of the synchronization operation.

8. The dog clutch engagement control system according to claim 7, wherein
the output shaft is connected to a drive wheel (92) of a vehicle (90), and
the controller is configured to change the idle rotational speed in accordance with a vehicle speed.

9. The dog clutch engagement control system according to claim 1 or 2, wherein
the controller is configured to:
estimate an operation delay time of the clutch actuator based on information regarding a delay factor of the clutch actuator; and
start driving the clutch actuator in advance of the predicted future engagement timing by an advance operation time that is adjusted in accordance with the operation delay time.

10. The dog clutch engagement control system according to claim 9, wherein
the delay factor is a time constant of filter processing by a filter unit (71) that filters an output signal of the phase difference sensor, and
the advance operation time is set to be longer as the time constant increases.

11. The dog clutch engagement control system according to claim 1 or 2, wherein
the output shaft is connected to a drive wheel (92) of a vehicle (90), and
the controller is configured to:
(i) execute the prediction of the future engagement timing and drive the clutch actuator when it is determined that the predetermined prediction execution condition is satisfied in accordance with an operational state of the vehicle; and
(ii) drive the clutch actuator based on a rotational speed difference between the input shaft and the output shaft without executing the prediction of the future engagement timing when it is determined that the predetermined prediction execution condition is not satisfied in accordance with the operational state of the vehicle.

12. The dog clutch engagement control system according to claim 11, wherein
the controller is configured to determine that the predetermined prediction execution condition is not satisfied when a vehicle speed is lower than a predetermined threshold.
